# EUROPÄISCHE PATENTANMELDUNG

(11) **EP 4 446 693 A1**
(43) Veröffentlichungstag der Anmeldung: **16.10.2024**
(21) Anmeldenummer: 23168013.3
(22) Anmeldetag: 14.04.2023
(51) Int. Cl.: G01B 9/02015, G01B 9/02091, G01B 11/24, G01B 11/30

(54) **OPTISCHER KOHÄRENZTOMOGRAPHIESCANNER UND VERFAHREN ZUR ERMITTLUNG EINER TOPOLOGIE UND/ODER DER ANISOTROPIE EINES OPTISCH TRANSPARENTEN FLÄCHENKÖRPERS**

(71) Anmelder: Heraeus Consulting & IT Solutions GmbH, 63450 Hanau (DE)
(72) Erfinder: Hornung, Thomas, 63450 Hanau (DE)
(74) Vertreter: Meissner Bolte Partnerschaft mbB

(57) **Zusammenfassung**

Die zu Grunde liegende Erfindung betrifft einen optischen Kohärenztomographiescanner (1) zur kontaktlosen Ermittlung einer Topologie und/oder Anisotropie eines zumindest abschnittsweise optisch transparenten, ein- oder mehrschichtigen Flächenkörpers (2), wie beispielsweise eine einer Glasscheibe oder einer Verbundglasscheibe. Der Kohärenztomographiescanner (1) umfasst eine Messeinheit (4) mit einer Messstrecke (M) mit mehreren stationären Sensoreinheiten (8, 10) und eine Transfereinheit (3) mit einer Förderplattform (6) zur Auflage des Flächenkörpers (2), wobei die Förderplattform (6) eine Förderebene (E) der Fördereinheit (3) definiert, und die Fördereinheit (3) dazu eingerichtet ist, den Flächenkörper (2) in einer im Wesentlichen linearen Förderrichtung (F) parallel zur Förderebene (E) durch die Messstrecke (M) und flächig an den Sensoreinheiten (9, 11) vorbei zu fördern. Die Messeinheit (M) umfasst als Sensoreinheiten zumindest eine optische Kohärenztomographiesensoreinheit (9) zur Erfassung von Topologie- und/oder Anisotropiedaten des Flächenkörpers (2) mittels optischer Kohärenztomographie und zumindest eine optische Positionssensoreinheit (10) zur Erfassung einer Raumposition des Flächenkörpers (2). Die Kohärenztomographiesensoreinheit (1) umfasst ferner einen sich quer zur Förderrichtung (F) und im Wesentlichen parallel zur Förderebene (E) erstreckenden Messarm (8), dessen Länge eine senkrecht zur Förderrichtung (F) gemessene Breite (B) der Messstrecke (M) festlegt, wobei der Messarm (8) zumindest einen Kohärenztomographiesensor (9) mit einer der Förderebene (E) zugewandten Messseite aufweist.

## Beschreibung

Die zu Grunde liegende Erfindung betrifft einen optischen Kohärenztomographiescanner zur kontaktlosen Ermittlung einer Topologie und/oder Anisotropie eines zumindest abschnittsweise optisch transparenten, ein- oder mehrschichtigen Flächenkörpers, wie beispielsweise einer Glasscheibe oder einer Verbundglasscheibe, und ein Verfahren zur Ermittlung einer Topologie und/oder der Anisotropie eines optisch transparenten Flächenkörpers.

Zur Vermessung von Glasscheiben und Sicherheitsglasscheiben beschreibt die DIN-Norm EN12150-1 ein taktiles Verfahren zur Charakterisierung von Welligkeit, Kantenkrümmung, von und lokalen Verformungen und Umfangsverformungen bei Sicherheitsgläsern.

An Bau- und Architekturglas mit Abmessungen von z.B. 100 mmx250 mm bis 3000 mm x 6000 mm und einer Dicke von beispielsweise 4 - 10 mm, typischerweise bis zu 19 mm, sind gewisse Qualitätsanforderungen gestellt. Übliche Spezifikation legen z.B. für die Gesamtwölbung eine Obergrenze von 5 mm/m fest.

In der Automobilindustrie werden üblicherweise gekrümmte Glassubstrate für Windschutzscheiben eingesetzt. Auch hier müssen die Glassubstrate strenge Anforderungen hinsichtlich Form und Krümmung erfüllen.

Bei der Glasherstellung wird ein Vorspannprozess zur Härtung des Glases eingesetzt, der sich jedoch nachteilig auf die Gesamtkrümmung auswirken kann, so dass ein Glashersteller Gesamtkrümmung des hergestellten Glases zumindest in statistischen Stichproben kontrollieren müssen. Das in der DIN-Norm EN12150-1 beschriebene Messverfahren ist jedoch vollständig manuell und taktil, und entsprechend vergleichsweise aufwändig in der Durchführung. Bei der vergleichsweisen aufwändigen manuell taktilen Prüfung kann die taktile Messung zu Oberflächenbeschädigungen am Glas führen.

Andere Messverfahren für Glasscheiben sind entweder beschränkt hinsichtlich der maximalen Größe der Glasscheibe und/oder beschränkt auf eine konkrete Eigenschaft, wie lokale Krümmung, Defektdetektion, Anisotropie, usw. Ferner können bei bekannten Messverfahren Schwierigkeiten auftreten, wenn das Glassubstrat beschichtet ist, beispielsweise mit reflektierenden Schichten, Metall- oder Emaille-Schichten.

Darüber hinaus sind bekannte Verfahren, wie auch die mechanisch-taktilen Verfahren, für viele Anwendungsbereiche zu ungenau.

Davon ausgehend besteht Bedarf an vereinfachten, genauen und effizienten Lösungen zur Ermittlung der Topologie, wie der Krümmung, von Gläsern.

Davon ausgehend ist es eine Aufgabe der vorliegenden Erfindung, Möglichkeiten bereitzustellen, die eine vereinfachte, insbesondere automatisierbare, genaue und/oder effiziente Ermittlung der Topologie und/oder Anisotropie, wie z.B. der Krümmung, von Glasscheiben, im Allgemeinen von zumindest abschnittsweise optisch transparenten Flächenkörpern, ermöglichen.

Diese Aufgabe wird gelöst durch die Merkmale der unabhängigen Ansprüche. Ausgestaltungen der Erfindung ergeben sich aus den abhängigen Ansprüchen und der nachfolgenden Beschreibung von Ausführungsbeispielen.

Nach Ausgestaltungen ist ein optischer Kohärenztomographiescanner zur automatisierten, kontaktlosen Ermittlung einer Topologie und/oder der Anisotropie eines zumindest abschnittsweise optisch transparenten, ein- oder mehrschichtigen Flächenkörpers vorgesehen.

Die Topologie kann dabei eine zwei- oder dreidimensionale Topologie, z.B. Krümmung, des Flächenkörpers betreffen. Insbesondere ermöglicht der optische Kohärenztomographiescanner, nachfolgend kurz auch "Scanner" genannt, nicht nur eine Ermittlung der Topologie, sondern bei Verwendung polarisations-sensitiver Messmethoden, auch die Ermittlung der Anisotropie des Flächenkörpers.

Der Flächenkörper kann eine oder mehrere Schichten umfassen, d.h. ein- oder mehrschichtig ausgebildet sein, wie beispielsweise Verbundglas. Der Flächenkörper kann aus einem Glassubstrat hergestellt sein, mithin also eine Glasscheibe oder eine Verbundglasscheibe usw. umfassen.

Unter der Topologie werden insbesondere lokale und/oder globale Krümmungen, Kantenkrümmungen, Welligkeiten usw. verstanden.

Wie nachfolgend noch genauer beschrieben wird, beruht der Scanner auf optischer Kohärenztomographie, kurz OCT. Der Einsatz von OCT ermöglicht eine flexible, automatisierbare und vergleichsweise genaue Charakterisierung der Flächenkörper bzw. Flachkörper.

Der Scanner umfasst eine Transfereinheit und eine Messeinheit.

Die Messeinheit definiert eine Messstrecke mit mehreren stationären Sensoreinheiten, wobei die Sensoreinheiten an der Messstrecke angeordnet sind und/oder diese definieren. Stationär soll insbesondere bedeuten, dass die Sensoreinheiten bzgl. einer Förderbewegung der Fördereinheit bzw. Förderplattform, d.h. bzgl. einer Förderbewegung des Flächenkörpers, ruhen. Die Sensoreinheiten können beispielsweise bezüglich der Förderbewegung ortsfest an einem oder mehreren Gestellen, Halteelementen oder -plattformen angebracht sein.

Die Transfereinheit weist eine Fördereinheit mit einer Förderplattform zur Auflage des Flächenkörpers auf. Bei der Förderplattform kann es sich z.B. um eine Fördereinrichtung handeln, auf bzw. mit welcher der Flächenkörper horizontal, vertikal oder vertikal geneigt an der Messstrecke vorbeibewegt bzw. vorbeigefördert werden kann. Die Förderplattform kann eine oder mehrere Auflageabschnitte aufweisen, an welchen der Flächenkörper aufliegt. Ein oder mehrere Auflageabschnitte können bei der Bewegung durch die Förderplattform beispielsweise parallel zu einer Längs- oder Breitenerstreckung des Flächenkörpers verlaufen und an einer durch Länge und Breite des Flächenkörpers definierten Fläche bzw. Seite des Flächenkörpers anliegen. Möglich ist auch, beispielsweise wenn die Förderplattform dazu eingerichtet ist, den Flächenkörper vertikal oder vertikal geneigt zu fördern, dass ein oder mehrere Auf- oder Anlageabschnitte bei der Bewegung durch die Förderplattform an einer Stirn- oder Seitenkante des Flächenkörpers anliegen.

Die Förderplattform definiert eine, z.B. horizontale, vertikale oder vertikal geneigte, Förderebene der Fördereinheit, Ferner ist die Fördereinheit dazu eingerichtet, den Flächenkörper in einer im Wesentlichen linearen Förderrichtung parallel zur Förderebene durch die Messstrecke und flächig an den Sensoreinheiten vorbei zu fördern. Die Fördereinheit bzw. die Förderplattform kann nach Art eines Linearförderers ausgebildet sein.

Der Begriff "flächig" soll sich dabei insbesondere auf eine durch Längs- und Breitseiten oder - kanten des Flächenkörpers aufgespannte Ebene bzw. Fläche beziehen. Mithin soll "flächig vorbeifördern" bedeuten, dass der Flächenkörper mit einer durch Längs- und Breitseiten oder - kanten aufgespannten Fläche oder Seite an den Sensoreinheiten vorgebeigefördert wird. Üblicherweise umfasst ein Flächenkörper zwei gegenüberliegende, voneinander abgewandte Seiten, wobei "flächig vorbeifördern" insoweit so zu verstehen ist, dass der Flächenkörper mit einer dieser Seiten, den Sensoreinheiten zugewandt an den Sensoreinheiten vorbeigefördert bzw. bewegt wird. An dem Flächenkörper randseitig zwischen gegenüberliegenden Seiten verlaufende Flächen stellen Stirnseiten oder -flächen dar.

Die Messeinheit umfasst als Sensoreinheiten zumindest eine optische Kohärenztomographiesensoreinheit zur Erfassung von Topologie- und/oder Anisotropiedaten des Flächenkörpers mittels optischer Kohärenztomographie (OCT). Ferner umfasst die Messeinheit zumindest eine optische Positionssensoreinheit zur Erfassung einer Raumposition des Flächenkörpers während der Erfassung der Daten, sprich der Topologie- und/oder Anisotropiedaten.

Die Kohärenztomographiesensoreinheit umfasst zumindest einen sich quer zur Förderrichtung und im Wesentlichen parallel zur Förderebene erstreckenden Messarm. Die Länge des Messarms legt eine senkrecht zur Förderrichtung gemessene Breite der Messstrecke fest. Der Messarm umfasst zumindest einen Kohärenztomographiesensor.

Der Kohärenztomographiesensor weist eine Messseite auf, die der der Förderebene zugewandt ist. Beispielsweise kann eine Messachse des Kohärenztomographiesensors im Wesentlichen senkrecht zur Förderebene ausgerichtet sein. Jedenfalls können der Kohärenztomographiesensor und die Transfereinheit bzw. Fördereinheit so eingerichtet sein, dass der Flächenkörper an der Messseite vorbeibewegt wird, wobei eine Seite des Flächenkörpers der Messseite zugewandt ist, was bedeutet, dass der Flächenkörper flächig an den Sensoreinheiten vorbeibewegt wird.

Durch die Positionssensoren, bei welches es sich z.B. ebenfalls im OCT-Sensoren handeln kann, kann die Position des Flächenkörpers im Raum, insbesondere bezüglich der Förderebene, während der Bewegung durch die Messstrecke genau ermittelt werden. Die Position kann zur Korrektur etwaiger unerwünschter Bewegungen des Flächenkörpers während der Bewegung durch die Messstrecke, z.B. Bewegungen des Flächenkörpers quer, senkrecht und/oder parallel zur Förderrichtung und/oder Förderebene, verwendet werden, wodurch die Genauigkeit der ermittelten Topologie und/oder Anisotropie verbessert und/oder die Messungen der Daten mit der Bewegung synchronisiert bzw. korrigiert werden kann.

Mit dem vorgeschlagenen Scanner kann der Flächenkörper beispielsweise in einem automatisierten Prozess, z.B. nach Auflegen auf die Förderebene, an den Sensoreinheiten vorbeibewegt werden, wobei die Kohärenztomographiesensoren auf Grundlage kohärenztomographischer Messungen die Topologie und/oder auf Grundlage polarisations-sensitiver Messungen die Anisotropie ermittelt. Aus den Daten kann, beispielsweise in einer dazu eingerichteten Auswerteeinheit mit z.B. einem oder mehreren Prozessoren, die zwei- oder dreidimensionale Topologie und/oder Anisotropie des Flächenkörpers ermittelt werden.

Je nach Datenerfassung und/oder Anzahl der Kohärenztomographiesensoren kann, beispielsweise wahlweise, eine globale oder lokale Topologie und/oder Anisotropie ermittelt werden. Je nach Datenerfassung, Rasterung bei der Datenerfassung und/oder Anzahl der Messpunkte pro bewegter Länge des Flächenkörpers können aus einem erfassten Datensatz wahlweise lokale oder globale Eigenschaften ermittelt werden, wie beispielsweise lokale oder globale Krümmung, Durchbiegung, Kantenkrümmung, Welligkeit usw.

Die OCT-basierte Vermessung ist vergleichsweise genau, auch bei bewegtem Flächenkörper, beispielsweise mit Fördergeschwindigkeiten von 0,2 m/s, und erfolgt berührungslos. Der vorgeschlagene Scanner kann in einem Inline-Prozess implementiert werden, beispielsweise als ein Prozessschritt einer Anlage zur Herstellung von Sicherheitsglasscheiben, insbesondere im Zusammenhang der Glashärtung (Tempering). So kann während des Herstellungsprozesses eine Qualitätskontrolle im Wesentlichen an allen hergestellten Produkten durchgeführt werden. Durch die Positionssensoren ist der Scanner robust gegenüber etwaigen Störbewegungen des Flächenkörpers, etwa quer oder senkrecht zur Förderbewegung und/oder Förderebene.

Des Weiteren ermöglicht der vorgeschlagene Scanner die Vermessung vergleichsweise großer Flächenkörper mit Abmessungen bis hin zu 4.000 mm x 6.000 mm oder mehr. Ferner ist der vorgeschlagene Scanner in einfacher Weise skalierbar und kann insoweit einfach an unterschiedliche Anforderungen und Formate von Flächenkörpern angepasst werden. Basierend beispielsweise auf der Positionssensoreinheit ist es möglich, die Größe des Flächenkörpers, auch lokal, zu ermitteln, und die Erfassung der Daten auf die ermittelte Größe anzupassen. Mithin ist es in Ausgestaltungen möglich, die Datenerfassung quasi automatisch an die jeweilige Größe des Flächenkörpers anzupassen.

Nach Ausgestaltungen umfasst der zumindest eine Kohärenztomographiesensor eine Laserlichtquelle, insbesondere eine MEMS-VCSEL, vorzugsweise eine MEMS-VCSEUFDML, Lichtquelle, weiter vorzugsweise eine Swept-Soure MEMS-VCSEL/FDML Lichtquelle. Dabei sind die Abkürzungen MEMS, VCSEL und FDML im üblichen Sinne der Lasertechnologie zu verstehen: MEMS = Mikroelektromechanisches System (engl.: Microelectromechanical System); VCESL = Oberflächenemittierender Laser mit vertikalem Resonator (engl.: Verticalcavity surface-emitting laser); FDML = Fourierdomänen Modenkopplung (engl.: Fourier Domain Mode Locked). Die genannten Laser eignen sich insbesondere zur Charakterisierung der Topologie und/oder Anisotropie von optisch transparenten Materialien, insbesondere von Flächenkörpern wie Glasscheiben, Verbundglasscheiben, Sicherheitsglas usw.

Nach Ausgestaltungen sind die Messeinheit und die Fördereinheit für eine Fördergeschwindigkeit von bis zu 0,2 m/s oder mehr eingerichtet. Beispielsweise kann die Fördereinheit einen Förderantrieb aufweisen, der im Betrieb den Flächenkörper mit einer Geschwindigkeit von 0,2 m/s oder mehr durch die Messstrecke bzw. über die Förderplattform bewegt. Die Messeinheit kann hinsichtlich des Abstandes und Messdauer von Einzelmessungen an die jeweilige Fördergeschwindigkeit angepasst sein. Besonders geeignet hierzu sind die vorgenannten Laserarten wie MEMS-VCSEL und MEMS-VCSEUFDML.

Nach Ausgestaltungen kann der Messarm im Wesentlichen senkrecht oder zur Förderrichtung geneigt angeordnet sein. Insbesondere ist es möglich, dass der Messarm bezüglich einer Senkrechten zur Förderrichtung in Förderrichtung geneigt angeordnet ist und/oder dass ein Neigungswinkel variabel einstellbar ist. Ein entsprechender Neigungswinkel kann dabei im Bereich zwischen 0 Grad und 20 Grad, insbesondere zwischen 0 Grad und 5 Grad.

Nach Ausgestaltungen kann vorgesehen sein, dass der Neigungswinkel des Messarms einstellbar, insbesondere automatisch einstellbar ist. Beispielsweise kann der Scanner eine mit dem Messarm gekoppelte Aktuatoreinheit aufweisen, mit welcher der Neigungswinkel veränderbar ist. Insbesondere kann der Messarm an einem längsseitigen Ende mit einer Drehlagerung drehbar gelagert, und mit der Aktuatoreinheit gekoppelt sein, so dass bei Betätigung der Aktuatoreinheit der Neigungswinkel des Messarms durch eine Drehbewegung um die Drehlagerung veränderbar bzw. einstellbar ist. Die Drehbewegung erfolgt dabei im Wesentlichen in einer parallelen Ebene zur Förderebene, wobei das dem drehbar gelagerten Ende des Messarms gegenüberliegende, z.B. freie, Ende eine Bewegung gemäß einem Kreisbogensegment ausführen kann.

Insbesondere in Ausgestaltungen mit veränderbarem oder einstellbarem Neigungswinkel kann der Scanner eine mit dem einen oder mehreren Kohärenztomographiesensoren gekoppelte Nachführungseinheit aufweisen. Die Nachführungseinheit kann mit dem einen oder mehreren Kohärenztomographiesensoren beispielsweise mechanisch gekoppelt sein. Die Nachführungseinheit kann dazu eingerichtet sein, einen Sensorwinkel, insbesondere einen Winkel bzw. einen Sensorkopfwinkel eines Sensors bzw. Sensorkopfs zur Erfassung von Kohärenztomographiedaten, zu variieren oder einzustellen. Die Nachführungseinheit ist vorzugsweise so eingerichtet, dass der Winkel bzw. Sensorkopfwinkel, vorzugsweise automatisch, in Abhängigkeit des Neigungswinkels einstellbar ist bzw. eingestellt wird. In Ausgestaltungen kann vorgesehen sein, dass die Nachführung des Sensorkopfwinkels bei vergleichsweise kleinem Neigungswinkel, beispielsweise bei Winkels von bis zu 5 Grad, nicht aktiviert wird, und erst bei größeren Neigungswinkeln, beispielsweise ab 5 Grad, eine Nachstellung des Sensorwinkels in Abhängigkeit des Neigungswinkels erfolgt.

Nach Ausgestaltungen kann die Nachführungseinheit, oder allgemein eine Einheit zur Einstellung des Sensorwinkels zur Förderebene oder Messebene vorgesehen sein, die eine Einstellung des Sensorwinkels in Abhängigkeit des Neigungswinkels und/oder in Anhängigkeit der Form, z.B. der Krümmung, des Flächenkörpers ermöglicht.

Nach Ausgestaltungen kann vorgesehen, sein, dass der Neigungswinkel in Abhängigkeit der Größe, Geometrie oder Dimension des Flächenkörpers, beispielsweise eine quer oder senkrecht zur Förderrichtung gemessene Breite oder Länge, und/oder in Abhängigkeit von der Transportgeschwindigkeit durch die Messstrecke eingestellt wird. Eine solche Einstellung kann automatisch erfolgen, beispielsweis basierend auf ermittelten Geschwindigkeitswerten und/oder basierend auf der Größe, Geometrie oder Dimension des Flächenkörpers.

Nach Ausgestaltungen ist der Messarm, bis auf etwaige Verstellbarkeit des Neigungswinkels ortsfest angebracht.

Nach Ausgestaltungen kann zumindest eine erste Positionssensoreinheit im Bereich der Messstrecke an einem Ende des Messarms, d.h. an oder im Bereich eines in Längsrichtung des Messarms gelegenen Ende, angeordnet sein. Ein oder mehrere zweite Positionssensoren können, senkrecht zur Förderrichtung gemessen, von der ersten Positionssensoreinheit beabstandet angeordnet sein. Mithin können parallel und ggf. quer zur Förderrichtung ein oder mehrere Messpunkte mit jeweiligen Positionssensoren zur Erfassung der räumlichen Position des Flächenkörpers umgesetzt sein.

Gemäß Ausgestaltungen kann/können der erste Positionssensor oder ein oder mehrere Positionssensoren an oder im Bereich eines, z.B. parallel zur Förderrichtung verlaufenden, Anschlags ortsfest angebracht sein. Der Anschlag kann dabei derart angeordnet und ausgerichtet sein, dass der Flächenkörper bei und während der Bewegung durch die Messstrecke an dem Anschlag anliegt. Ist die Förderebene beispielsweise im Wesentlichen vertikal oder zur Vertikalen geneigt ausgerichtet, kann der Anschlag an einem unteren Ende der Förderebene angeordnet sein, so dass der Flächenkörper in der Förderebene liegend und an dem untern Anschlag angeschlagen durch die Messstrecke transportiert bzw. bewegt werden kann. Ein entsprechender Anschlag dient insbesondere dazu, eine in Förderrichtung lineare Bewegung des Flächenkörpers festzulegen. Bei dieser Anordnung bewegen sich Teile oder Abschnitte des zu vermessenden Flächenkörpers im Wesentlichen stets im Bereich des Anschlags, so dass im Bereich des Anschlags ein oder mehrere ortsfeste Positionssensoren verwendet werden können. Die Positionssensoren ermöglichen mithin eine Ermittlung der Position des Flächenkörpers bei der Bewegung durch die Messstrecke bzw. über die Förderebene.

Der zweite Positionssensor, oder ein oder mehrere zweite Positionssensoren, können ortsfest oder verstellbar angebracht sein. Beispielsweise können ein oder mehrere zweite Positionssensoren quer oder senkrecht zur Förderrichtung verstellbar positionierbar sein. Verstellbare zweite Positionssensoren können so eingerichtet sein, dass deren Abstand zu dem oder den ersten Positionssensoren an die Breite des Flächenkörpers anpassbar ist. Mithin kann der zumindest eine zweite Positionssensor relativ zum ersten Positionssensor einstellbar variabel positionierbar eingerichtet sein, insbesondere derart, dass ein Abstand der Positionssensoreinheiten an eine quer zur Förderrichtung gemessene Breite eines durch die Messstrecke geförderten Flächenkörpers anpassbar ist. Der zumindest eine zweite Positionssensor kann zur räumlichen Positionsermittlung des Flächenkörpers und/oder zur Erfassung von Topographiedaten und/oder Anisotropiedaten verwendet werden.

Nach Ausgestaltungen kann die Kohärenztomographiesensoreinheit mehrere, insbesondere eine Vielzahl von, Kohärenztomographiesensoren umfassen, die längs des Messarms verteilt, insbesondere am Messarm ortsfest, angebracht sind. Über die Länge des Messarms verteilt können mehrere Kohärenztomographiesensoren vorgesehen sein, die bezüglich der Länge des Messarms voneinander beabstandet, z.B. an vorgegebenen ortsfesten Positionen, angeordnet sind.

Nach Ausgestaltungen kann die Kohärenztomographiesensoreinheit zumindest einen Kohärenztomographiesensor umfassen, der längs des Messarms bewegbar, insbesondere oszillatorisch bewegbar, angeordnet ist. Zur Bewegung des Kohärenztomographiesensors kann der Messarm zumindest einen mit dem oder den Kohärenztomographiesensoren gekoppelten Aktuator zum Bewegen des Kohärenztomographiesensors längs des Messarms aufweisen. Der Aktuator kann ferner dazu eingerichtet sein, den Sensorwinkel bzw. die Winkelstellung des Kohärenztomographiesensors einzustellen, was weiter oben bereits diskutiert wurde, wodurch eine adaptive Winkelkorrektur möglich wird, die z.B. bei gebogenen oder gekrümmten Flächenkörpern oder Substraten verwendet werden kann. Eine Winkelkorrektur kann beispielsweise dazu verwendet werden, den Winkel des/der Kohärenztomographiesensoren so einzustellen, dass, bei gekrümmten oder gebogenen Flächenkörpern, die Strahlung der Lichtquelle des Kohärenztomographiesensors stets im Wesentlichen senkrecht auf den Flächenkörper trifft, so dass die am Flächenkörper reflektierte Strahlung der OCT-Tomographie zuverlässig vom Detektor erfasst werden kann.

Nach Ausgestaltungen kann die Kohärenztomographiesensoreinheit eingerichtet sein zur Ausführung einer polarisations-sensitiven OCT. Basierend auf einer solchen polarisations-sensitiven OCT ist es beispielsweise möglich, die Lichtdrehung durch das Material des Flächenkörpers und daraus wiederum Anisotropiedaten zu ermitteln. Hierzu kann die Kohärenztomographieeinheit zumindest einen Polarisator umfassen, der beispielsweise einer Strahlungsquelle, insbesondere Lichtquelle, der Kohärenztomographiesensoreinheit nachgeschaltet sein kann.

Gemäß Ausgestaltungen kann vorgesehen sein, dass der Scanner und/oder das Verfahren so eingerichtet sind, dass Daten zum Flächenkörper an die Kohärenztomographiesensoreinheit übermittelt werden, und dass die Topologiedaten und/oder Anisotropiedaten in Abhängigkeit der Daten zum Flächenkörper aufgenommen werden. Bei den Daten kann es sich beispielsweise im Größe, Dicke, Anzahl der Schichten, Reflexionstyp und/oder Reflexionsgrad, jeweils global oder lokal, Verlauf des Reflexionsgrads usw.

Gemäß Ausgestaltungen, bei welchen der nominale Reflexionsgrad des Flächenkörpers z.B. durch das Oberflächendesign variiert (z.B. Beschichtungen, Folierung, Emaille usw.) können Daten betreffend unterschiedliche bzw. lokal variierende Reflexionsgrade des Flächenkörpers der Kohärenztomographiesensoreinheit zur Verfügung gestellt werden. Die Kohärenztomographiesensoreinheit kann basierend auf den Daten z.B. variable optische Abschwächer (VOA) oder akusto-optische Modulatoren (AOM) synchron zur Bewegung des Sensors ansteuern, so dass z.B. die Signale entsprechend dem Design und variierendem Reflexionsgrad mehr oder weniger abgeschwächt werden, um so eine im Wesentlichen gleichmäßige Reflexion zu erhalten und eine Sättigung des Detektors zu verhindern.

Nach Ausgestaltungen kann vorgesehen sein, dass zumindest ein Kohärenztomographiesensor, vorzugsweise alle Kohärenztomographiesensoren, ein Hohlspiegelmodul umfassen. Das Hohlspiegelmodul kann einen Hohlspiegelstreifen umfassen, dessen optische Achse im Wesentlichen senkrecht zur Förderebene ausgerichtet ist, und dessen Spiegelfläche der Förderebene zugewandt ist. Die Hohlspiegelmodule sind am Messarm bevorzugt so angeordnet, dass ein längs der optischen Achse des Hohlspiegels gemessener Abstand zwischen dem Hohlspiegel und einem durch die Messstrecke geförderten Flächenkörper im Bereich der doppelten Brennweite des Holspiegels liegt. Der Hohlspiegel kann eine sphärische oder elliptische Kontur aufweisen. Vorzugsweise sind die Hohlspiegelstreifen mit deren Längsrichtung parallel zum Messarm ausgerichtet. Dadurch kann der Flächenkörper in Abtastlinien oder -streifen, die parallel zum Messarm bzw. quer oder senkrecht zur Förderrichtung verlaufen, abgetastet werden. Bei geeignet gewählter Krümmung des/der Hohlspiegel kann erreicht werden, dass der Lichtstrahl bei der Abtastung des Flächenkörpers mittels OCT in Linien oder Streifen parallel zum Messarm, im Wesentlichen stets orthogonal auf den Flächenkörper trifft.

Nach Ausgestaltungen kann ein Hohlspiegel beispielsweise ein platten- oder folienartiges Spiegelelement umfassen, das gemäß dem Hohlspiegelradius gebogen oder geformt ist. Als Material kommt beispielsweise Polystyrol in Betracht, wobei die Dicke des Hohlspiegels beispielsweise im Bereich von 5 mm bis 30 mm, vorzugsweise bei etwa 20 mm, liegen kann. Nach Ausgestaltungen kann im Brennpunkt des Hohlspiegelmoduls ein Kollimator, ein Resonant-Scanner, ein MEMS-Spiegel, oder ein Polygon-Abtastspiegel angeordnet sein. Solche Elemente ermöglichen insbesondere eine genaue Abtastung des in Förderrichtung bewegten Flächenkörpers, beispielsweise quer zur Förderrichtung, und mithin eine vergleichsweise zuverlässige Ermittlung der Topologiedaten und/oder Anisotropiedaten.

Nach Ausgestaltungen können zwei oder mehrere Hohlspiegelmodule vorgesehen sein, wobei in Längsrichtung des Messarms zumindest zwei Hohlspiegelmodule, vorzugsweise alle Spiegelmodule, hintereinander, insbesondere unmittelbar hintereinander, angeordnet sind. Mit entsprechenden Hohlspiegelmodulen kann erreicht werden, dass im Wesentlichen über die gesamte Länge des Messarms, zumindest jedoch über einen vergleichsweise großen Bereich der Messarmlänge der Flächenkörper in Abtastlinien oder -streifen abgetastet werden kann. Insbesondere ist es bei geeigneter Anordnung möglich, den Flächenkörper parallel zum Messarm im Wesentlichen zumindest lokal kontinuierlich, d.h. über eine gewisse Länge parallel zum Messarm hinweg - und nicht nur an lokalen Messpunkten - abzutasten. Bei geeigneter Ausbildung und Anordnung von Hohlspiegelmodulen ist es beispielsweise möglich, Flächenkörper mit einer parallel zum Messarm gemessenen Dimension von bis zu 6.000 mm oder mehr abzutasten.

Nach Ausgestaltungen können in Längsrichtung des Messarms zumindest zwei Hohlspiegelmodule angeordnet sein, die quer zur Längsrichtung des Messarms zueinander versetzt angeordnet sind. Dabei sind die Hohlspiegelmodule vorzugsweise so angeordnet, dass parallel zur Längsrichtung des Messarms bezüglich der Längsrichtung des Messarms keine Abtastlücken bei der OCT-basierten Abtastung des Flächenkörpers vorliegen. Abtastlücken können beispielsweise vorliegen, wenn die Hohlspiegelmodule in Längsrichtung des Messarms linear hintereinander angeordnet sind, wobei Abtastlücken in den Bereichen zwischen den Hohlspiegeln entstehen können.

Nach Ausgestaltungen kann die Kohärenztomographiesensoreinheit eine Laserlichtquelle mit einer zentralen Wellenlänge im Bereich des sichtbaren oder infraroten, beispielsweise im Bereich von 1 µm und 1,5 µm, insbesondere des mittleren infraroten, Spektralbereichs aufweisen, wobei die Laserlichtquelle vorzugsweise eine Kohärenzlänge im Bereich von Kohärenzlänge 0,2 m bis 100 m aufweist.

Nach Ausgestaltungen ist die Kohärenztomographiesensoreinheit dazu eingerichtet ist, bei einem Scan eines Flächenkörpers mehrere Kohärenztomographiesensoren unter Verwendung eines Strahlteilers parallel zu betreiben.

Nach Ausgestaltungen kann der zumindest eine Kohärenztomographiesensor im Strahlengang der verwendeten Strahlung eine oder mehrere optische Elemente zur Strahlfaltung aufweisen. Solche Elemente sind z.B. dazu geeignet, die Baugröße bzw. den erforderlichen Bauraum zu verkleinern oder minimieren.

Nach Ausgestaltungen kann der Kohärenztomographiesensor bzw. ein entsprechender Messkopf als Auskoppelelement für ausgehende Strahlung und/oder als Einkoppelelement für reflektierte, eingehende Strahlung ein Linsenarray mit einer Vielzahl an Linsen oder Linsengruppen umfassen, wobei die Linsen oder Linsengruppen in Richtung parallel zum Messarm hintereinander angeordnet sind. Die Linsen einer Linsengruppe sind vorzugsweise linear hintereinander angeordnet, wobei die lineare Anordnung parallel oder quer bzw. senkrecht zur Längsachse des Messarms verlaufen kann.

Das Auskoppelement kann im Strahlengang des ausgehenden Lichts beispielsweise lichtausgangsseitig, d.h. im Strahlengang endständig vor dem Flächenkörper, angeordnet sein. Im Strahlengang des eingehenden bzw. reflektierten Lichts kann das Auskoppelelement lichteingangsseitig angeordnet sein. Durch das Linsenarray kann erreicht werden, dass an gekrümmten Abschnitten des Flächenelements, z.B. mit Oberflächenwinkeln von bis zu +/-2,5 Grad, reflektiertes Licht sicher auf den Detektor der Kohärenztomographieeinheit trifft. Beispielsweise kann ein gewölbtes Glasfenster als Flächenkörper an den Rändern einen Oberflächenwinkel von bis zu +/-2,5 Grad aufweisen. Diese Oberflächenwinkel lenken reflektierte Strahlung bzw. Licht in eine andere Richtung verglichen mit einfallender, kollimierter Strahlung. Dies führt zu einer Brennfleckverschiebung sowohl in Quer- als auch in Längsrichtung, mit der Folge, dass die zurückreflektierte Strahlung bzw. das zurückreflektierte Licht nicht mehr erfasst werden kann, beispielsweise, weil die zurückreflektierte Strahlung nicht mehr auf eine Erfassungsoptik wie einen Galvanometerspiegel und/oder eine Einfangsfaser eines einem Detektor zugeordneten Lichtleiters gelenkt wird.

Nach Ausgestaltungen kann das Linsenarray mehrere Linsengruppen, und jede Linsengruppe kann mehrere Einzellinsen umfassen. Vorzugsweise sind die Einzellinsen einer Linsengruppe linear hintereinander angeordnet, und in ihrer Anordnung hintereinander quer, insbesondere senkrecht, oder parallel zur Längsrichtung des Messarms angeordnet. Die Einzellinsen einer Linsengruppe weisen bevorzugt unterschiedliche Brennweiten auf. Durch unterschiedliche Brennweiten kann erreicht werden, dass auch bei Abstandsvariationen zwischen Flächenkörper und Kohärenztomographiesensor bzw. Messkopf des Kohärenztomographiesensors, die innerhalb des durch die Brennweiten abgedeckten Bereichs liegen, ausreichend starke Reflexionssignale erhalten werden. Abstandsvariationen können beispielsweise durch Krümmungen oder Biegungen am Flächenkörper bedingt sein.

Nach Ausgestaltungen kann die Strahloptik des Kohärenztomographiesensors so eingerichtet sein, dass die Einzellinsen einer Linsengruppe jeweils gleichzeitig durch ausgehende Strahlung beaufschlagt werden. Die Strahloptik kann beispielsweise so eingerichtet sein, dass ein Strahl mit elliptischem Querschnitt erzeugt wird, der alle Einzellinsen einer Linsengruppe gleichzeitig beaufschlagt. Eine gleichzeitige Bestrahlung der Einzellinsen einer Linsengruppe kann insbesondere dann von Vorteil sein, wenn die Einzellinsen in ihrer Anordnung hintereinander senkrecht oder quer zum Messarm ausgerichtet sind. Sind die Einzellinsen einer Linsengruppe in ihrer Ausrichtung hintereinander parallel zum Messarm angeordnet sind, so können die Einzellinsen bei der Abtastung in Linien oder Streifen parallel zum Messarm nacheinander mit der Messstrahlung beaufschlagt werden.

Wie erwähnt ist es mit solchen Linsengruppen möglich, Variationen im Abstand zwischen Flächenkörper und Kohärenztomographiesensor bzw. einen zugeordneten Messkopf abzufangen.

Um beispielsweise Abstandsvariationen zwischen dem Flächenkörper und dem Linsenarray Rechnung zu tragen, kann eine Linsengruppe des Linsenarrays aus Einzellinsen mit unterschiedlichen Brennweiten (f) und Durchmessern (Ø) bestehen. Beispielhaft kann eine erste Einzellinse mit f=150 mm und Ø = 13,5 mm, eine zweite Einzellinse mit f=100 mm, Ø = 9 mm, und eine dritte Einzellinse mit f=50 mm, Ø = 4,5 mm vorgesehen sein.

Nach Ausgestaltungen kann eine Linsengruppe ein Tupel von 2 bis n (n ∈ N) Einzellinsen, z.B. ein Tripel, umfassen, wobei die Einzellinsen im Tupel entweder parallel oder quer bzw. senkrecht zum Messarm angeordnet sein können, d.h. entweder parallel oder quer bzw. senkrecht zur Scanrichtung längs des Messarms angeordnet sein können. Längs des Messarms können sich die Linsengruppen wiederholen, um so in Längsrichtung des Messarms eine Vielzahl an Messpunkten oder Messlinien zu erhalten. Wird die erste Variante gewählt, bei welcher die Einzellinsen der Tupel parallel zur Scanrichtung angeordnet sind, erhält man, verglichen mit einer Ausrichtung der Tupel quer oder senkrecht zum Messarm, eine verringerte räumliche Auflösung. Bei der zweiten Variante, bei welcher die Einzellinsen der Tupel senkrecht zur Scanrichtung ausgerichtet sind, ist es insbesondere von Vorteil bzw. erforderlich, dass der Beleuchtungsstrahl das gesamte Tupel beleuchtet, damit alle Einzellinsen eines Tupels gleichzeitig beleuchtet bzw. mit Strahlung beaufschlagt werden können. Verglichen mit dem ersten Fall kann eine höhere räumliche Auflösung bei Abtastung parallel zum Messarm erreicht werden.

Nach Ausgestaltungen kann im Strahlengang der ausgehenden Strahlung zumindest eine teiltransparente Referenz- oder Bezugsfläche, beispielsweise eine Fläche eines teiltransparenten Referenzsubstrats, angeordnet sein. Vorzugsweise bildet die Referenz- oder Bezugsfläche eine für die optische Ermittlung der Topologie- und/oder Anisotropiedaten ideale Referenzfläche bzw. ideale Messreferenz im optischen System. Die Referenz- oder Bezugsfläche kann eben, d.h. gerade, oder gekrümmt sein. Die Referenzfläche kann z.B. ausgebildet sein:
- an einer beschichteten Folie ausgebildet sein, die z.B. im Strahlengang angeordnet ist, wobei die Beschichtung als solche die Referenzfläche umfassen oder bilden kann;
- an oder als eine Fläche des Linsenarrays, z.B. eine von den Einzellinsen abgewandte Fläche des Linsenarrays;
- durch eine Flüssigkeitsoberfläche, wobei die Flüssigkeit vorzugsweise in einem vibrationsisolierten Behälter aufgenommen ist und die Oberfläche der Flüssigkeit die Referenzfläche bildet, und/oder
- an einem Referenzsubstrat, aus einem, z.B. für sichtbares Licht und/oder Infrarotlicht, transparenten Material.

Nach Ausgestaltungen kann die Referenzfläche kann an einem Referenzsubstrat ausgebildet und der Messseite des Messarms zugewandt sein. Auf der von der Referenzfläche abgewandten Seite des Referenzsubstrats kann ein Linsenarray, insbesondere ein Mikrolinsenarray, angeordnet sein. Nach Ausgestaltungen kann die Messeinheit so eingerichtet sein, dass im Strahlengang ausgehender Strahlung der zumindest einen Kohärenztomographiesensoreinheit und/oder der zumindest einen Positionssensoreinheit die Referenzfläche bzw. das Referenzsubstrat den Sensoren nachgeschaltet und der Messstrecke bzw. dem Flächenkörper vorgeschaltet ist.

Gemäß Ausgestaltungen kann die Referenzfläche bzw. das Referenzsubstrat zwischen der Messeinheit bzw. zwischen entsprechenden Sensoren und dem zu vermessenden Flächenkörper angeordnet sein. Gemäß Ausgestaltungen kann die Referenzfläche bzw. das Referenzsubstrat alle Sensoren, z.B. alle Kohärenzsensoren und alle Positionssensoren, überspannen. Insbesondere kann die Referenzfläche eine einheitliche, durchgehende Fläche bilden, die eine Messreferenz für alle Sensoren bildet.

Durch die Referenzfläche bzw. mit der Referenzfläche kann ein Referenzstrahl für die optische Kohärenztomographie erzeigt werden, wodurch z.B. ein OCT-Aufbau oder OCT-System mit Autokorrelation möglich ist. Der Referenzstrahl kann beispielsweise an der von den Einzellinsen des Linsenarrays abgewandten Seite des Substrats des Linsenarrays, die als Referenzfläche eingerichtet sein kann, erzeugt werden.

Nach Ausgestaltungen umfasst der Scanner ferner einen Strahlteiler, welcher die von einer Strahlungsquelle des Kohärenztomographiescanners ausgehende Strahlung auf den zumindest einen Kohärenztomographiesensor und zumindest einen Positionssensor der Positionssensoreinheit in einem vorgegebenen Verhältnis aufteilt.

Nach Ausgestaltungen umfasst der Scanner des Weiteren einen oder mehrere variable optische Abschwächer (VOA) oder akusto-optische Modulatoren (AOM), eingerichtet zur dynamischen Anpassung des Leistungspegels reflektierter Strahlung, insbesondere in Abhängigkeit eines vorbekannten Reflexionsgrads und/oder Reflexionstyps des Flächenkörpers. Reflexionsgrad und/oder Reflexionstyp können sich z.B. hinsichtlich einer spiegelnden Reflexion, bei welcher i.d.R. vergleichsweise stark reflektiert wird, und einer ungerichteten oder Diffusen Reflexion unterscheiden.

Gemäß Ausgestaltungen ist ein Verfahren zur Ermittlung einer, insbesondere zwei- oder dreidimensionalen, Topologie und/oder der Anisotropie eines zumindest abschnittsweise optisch transparenten, ein- oder mehrschichtigen Flächenkörpers vorgesehen. Bei dem Flächenkörper kann es sich beispielsweise um eine Glasscheibe oder Verbundglasscheibe handeln. Es ist vorgesehen, dass das Verfahren mit einem optischen Kohärenztomographiescanner nach einem der hierin beschriebenen erfindungsgemäßen Ausgestaltungen ausgeführt wird. Das Verfahren kann die folgenden Schritte umfassen:
a. Bereitstellen des Flächenkörpers an der Transfereinheit;
b. Bewegen des Flächenkörpers mittels der Transfereinheit durch die Messstrecke;
   während der Flächenkörper durch die Messstrecke bewegt wird:
c. kontinuierliches Erfassen einer Vielzahl an optischen Kohärenztomographiedaten mittels der Kohärenztomographiesensoreinheit und synchrones Erfassen einer Vielzahl an Positionstaten des Flächenkörpers mittels der Positionssensoreinheit,
d. Ermitteln einer Topologie und/oder Anisotropie des Flächenkörpers aus den Kohärenztomographiedaten und den Positionsdaten.

Gemäß Ausgestaltungen kann das Verfahren des Weiteren zumindest einen der folgenden Schritte und/oder zumindest eines der folgenden Merkmale umfassen:
- Fördern des Flächenkörpers durch die Messstrecke mit einer Geschwindigkeit von 0,2 m/s oder mehr.
- Bewegen eines längs des Messarms bewegbaren Kohärenztomographiesensors längs des Messarms mit einer Geschwindigkeit von 5 m/s oder mehr während der Erfassung der Topologiedaten und/oder Anisotropiedaten.
- Scannen des Flächenkörpers mit einer Scanrate von 1 bis 100 Hz.
- Abtasten des Flächenkörpers mit einer Abtastrate für eine Messung bzw. einen Messpunkt von 2 GS/s bis 10 GS/s, insbesondere etwa 2,5 GS/s (Giga-Samples pro Sekunde).
- Korrektur der Kohärenztomographiedaten basierend auf den Positionsdaten und/oder daraus ermittelten Bewegungsdaten des Flächenkörpers.
- Ermitteln der Topologie, wobei die Topologie eine globale und/oder lokale Krümmung des Flächenkörpers umfasst.
- Ansteuern des variablen optischen Abschwächers (VOA) oder akusto-optischen Modulators (AOM) in Abhängigkeit der Förderbewegung und eines für den Flächenkörper bekannten Reflexionsgradprofils und/oder Reflexionstyps, beispielsweise des Verlaufs des Reflexionsgrads und/oder -Typs längs des Flächenkörpers.
- Erzeugen einer Oberflächeneintrübung am Flächenkörper, insbesondere durch eine Flüssigkeit, wie Wasser, zur Erhöhung des Grads an diffuser Streuung, wodurch z.B. auch bei stark gekrümmten Flächen und bei nicht idealer orthogonaler Ausrichtung der Sensoren durch diffuse Streuung noch Reflexionslicht erhalten werden kann.
- Ermittlung der Dicke des Flächenkörpers auf Grundlage der Kohärenztomographiedaten.

Nach Ausgestaltungen umfasst der optische Kohärenztomographiescanner des Weiteren eine Steuereinheit die derart programmiert ist, dass diese im Betrieb des optischen Kohärenztomographiescanners ein Verfahren nach einem der hierin beschriebenen Ausgestaltungen bewirkt. In Ausgestaltungen kann der Scanner eine Steuereinheit mit einem Prozessor und einer zugeordneten Speichereinheit umfassen, auf der computerlesbare Befehle gespeichert sind, die bei Ausführung durch den Prozessor ein Verfahren nach einem der hierin beschriebenen verfahrensgemäßen Ausgestaltungen bewirken.

Gemäß Ausgestaltungen kann vorgesehen sein, dass die optische Kohärenztomographie aus polarisations-sensitiver OCT beruht. Hierzu kann beispielsweise einer Strahlungs- bzw. Lichtquelle nachgeschaltet ein Polarisator angeordnet sein. Aspekte zur polarisations-sensitiven OCT sind in Johannes F. de Boer, Christoph K. Hitzenberger, and Yoshiaki Yasuno, "Polarization sensitive optical coherence tomography - a review [Invited]," Biomed. Opt. Express 8, 1838-1873 (2017) beschrieben, dessen Offenbarungsgehalt hierin vollumfänglich einbezogen wird. Basierend auf polarisations-sensitiver OCT ist es beispielsweise möglich, die Anisotropie des Flächenkörpers bzw. Anisotropiedaten zu ermitteln, beispielsweise auf Grundlage der Lichtdrehung durch das Material des Flächenkörpers.

Der hierin erfindungsgemäß vorgeschlagene Scanner und das Verfahren zur Ermittlung der Topologie und/oder Anisotropie sind, wie weiter oben erwähnt, sowohl für horizontal, vertikal geneigt oder vertikal ausgerichtete Flächenkörper geeignet. Das bedeutet, dass die vom Flächenkörper durch Längs- und Breitseiten aufgespannte Fläche entweder horizontal, vertikal geneigt oder vertikal angeordnet sein kann. Insbesondere bei der Variante mit horizontal ausgerichtetem Flächenkörper können, bedingt durch die Schwerkraft, u. U. zusätzliche und für die Ermittlung der Topologie unterwünschte Verbiegungen oder Durchbiegungen, im allgemeinen Verformungen, am Flächenkörper auftreten. Der erfindungsgemäße Scanner und das erfindungsgemäße Verfahren können jedoch auch in solchen Fällen eingesetzt werden, bzw. entsprechende gravitative Verformungen können eliminiert oder bei der Ermittlung der Topologie berücksichtigt werden.

Nach einer Variante kann zur Eliminierung von gravitativen Verformungen der Flächenkörper in eine kräftefreie Konfiguration, insbesondere analog zum freien Fall, gebracht werden. Nach einer weiteren Variante kann der Flächenkörper zur Eliminierung gravitativer Verformungen in eine Messflüssigkeit, z.B. Wasser, eingetaucht werden, wodurch am Flächenkörper ein räumlich gleichmäßig verteiltes Kraftfeld bezogen auf die Gravitation erreicht werden kann.

Nach einer weiteren Variante kann die gravitative Verformung des Flächenkörpers, z.B. rechnerisch, ermittelt und als Korrektur bei der Ermittlung der Topologie berücksichtigt werden. Beispielsweise kann die Auswirkung der Schwerkraft auf die Verformung, d.h. die gravitative Verformung, in Kombination mit einer genau definierten Auflage, z.B. eine vorgegebene Punktauflage, des Flächenkörpers unter Verwendung von Finite-Elemente-Modellen oder basierend auf maschinellem Lernen und künstlicher Intelligenz (KI) ermittelt werden. Daten zur Ermittlung der gravitativen Verformung und/oder zum Anlernen einer Kl können beispielsweise auf Messungen, Empirie oder Korrelationsstudien beruhen, welche gravitative Verformungen bzw. Auswirkungen für einen Flächenkörper mit z.B. vorgegebener Konfiguration (Größe, Aufbau, Schichtanzahl, Form usw.) bezüglich vertikaler und horizontaler Ausrichtung und/oder welche gravitative Auswirkungen auf die Topologie und/oder Anisotropie bei vertikaler und/oder horizontaler Ausrichtung erfassen bzw. abbilden.

Ist zur Durchführung des Tomographieverfahrens zur Ermittlung der Topologie und/oder Anisotropie ein Wechsel zwischen vertikaler und horizontaler Position des Flächenkörpers erforderlich, beispielsweise weil die Ausgangsausrichtung des Flächenkörpers (z.B. horizontal) nicht derjenigen der Messausrichtung (z.B. vertikal) entspricht, so kann eine Kippvorrichtung vorgesehen sein bzw. verwendet werden. Eine solche Kippvorrichtung kann beispielsweise dazu eingerichtet sein, den Flächenkörper um bis zu 90 Grad zu drehen, beispielsweise aus der horizontalen Ausrichtung in die vertikale Ausrichtung oder umgekehrt.

Ausgestaltungen der Erfindung werden nachfolgend anhand der anhängenden Figuren näher beschrieben. Es zeigen:
- FIG. 1: schematisch einen optischen Kohärenztomographiescanner zur Charakterisierung eines Flächenkörpers;
- FIG. 2: eine schematische Darstellung zweier Hohlspiegel-Scanmodule;
- FIG. 3: eine Anordnung von Hohlspiegeln;
- FIG. 4, FIG. 5: eine Seitenansicht und Draufsicht auf eine Messanordnung gemäß einer Ausgestaltung;
- FIG. 6: Einzellinsen einer Linsengruppe;
- FIG. 7: einen Aufbau einer Messeinheit mit einer OCT-Lichtquelle und Strahlteilern;
- FIG. 8: einen beispielhaften Verfahrensablauf zur Datenerfassung bei der OCT; und
- FIG. 9: Verfahrensschritte zur optischen Charakterisierung eines Flächenkörpers gemäß einem erfindungsgemäßen Verfahren.

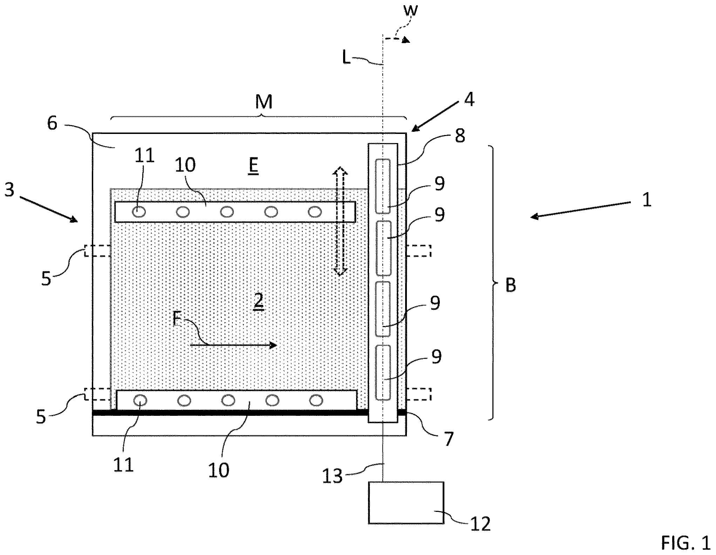

FIG. 1 zeigt schematisch einen optischen Kohärenztomographiescanner 1 (OCT-Scanner) zur Charakterisierung eines zumindest abschnittsweise optisch transparenten Flächenkörpers 2, wie eine Glasscheibe, eine Sicherheitsglasscheibe, Verbundglasscheibe bzw. Mehrfachglasscheibe.

Der OCT-Scanner 1 umfasst eine Transfereinheit 3 und eine Messeinheit 4. Die Transfereinheit 3 kann eine oder mehrere Fördereinheiten 5, die zusammen mit einer Förderplattform 6 angeordnet sind, aufweisen. Die Förderplattform 6 ist zur Auflage des Flächenkörpers 2 ausgebildet, und definiert eine Förderebene E, über welche der Flächenkörper 2 durch die Fördereinheit 5 gefördert bzw. bewegt wird. Die Förderplattform 6 kann z.B. vertikal ausgerichtet oder vertikal geneigt ausgerichtet sein. Möglich ist auch, dass die Förderplattform horizontal ausgerichtet ist.

An einem unteren Ende der Förderplattform 6 kann ein Anschlag 7 vorgesehen sein, an welchem der Flächenkörper 2 bei der Bewegung über die Förderplattform 6 in Förderrichtung F anliegt bzw. angeschlagen ist. Die Förderrichtung F entspricht einer linearen Bewegung über die Förderplattform 6, wobei der Flächenkörper 2 mit einer im Wesentlichen linearen Bewegung parallel zur Förderebene E durch eine Messstrecke M der Messeinheit 4 flächig an einem Messarm 8 des OCT-Scanners 1 vorbeigefördert wird.

Die Messeinheit 4, konkret der Messarm 8, umfasst als Sensoreinheiten eine oder mehrere optische Kohärenztomographiesensoreinheiten 9 (OCT-Einheiten 9 oder OCT-Sensoren 9), die dazu eingerichtet sind, basierend auf optischer Kohärenztomographie Daten zur Ermittlung der Topologie und/oder Daten zur Ermittlung der Anisotropie des Flächenkörpers, d.h. Topologiedaten und/oder Anisotropiedaten, zu erfassen.

Die Messeinheit 4 umfasst in dem Beispiel der FIG. 1 des Weiteren zwei Positionssensoreinheiten 10 mit jeweils mehreren Positionssensoren 11. Die Positionssensoreinheiten 10 bzw. Positionssensoren 11 sind dazu vorgesehen und eingerichtet, die Raumposition des Flächenkörpers 2 bei der Bewegung des Flächenkörpers 2 über die Förderebene E zu erfassen, insbesondere während der Erfassung der Topologiedaten und/oder Anisotropiedaten.

Der Messarm 8 definiert quer zur Förderebene E die maximale Breite B der Messstrecke M, die gleichzeitig die maximale Breite der Flächenkörper 2 festlegt, die mit dem OCT-Scanner 1 vermessen werden können. Sollen unterschiedlich breite Flächenkörper 2 vermessen werden, so kann vorgesehen, sein, dass eine der Positionssensoreinheiten 10 in Breitenrichtung verschiebbar, insbesondere durch einen Aktuator oder eine Antriebseinheit einstellbar positionierbar, ist, was in FIG. 1 durch einen gestrichelten Doppelpfeil angedeutet ist. Möglich ist es hingegen auch, dass die Positionssensoreinheiten 10 in einem vorgegebenen Abstand zueinander fest positioniert sind. Dabei kann der Abstand gemäß dem kleinsten mit dem OCT-Scanner 1 zu vermessenden Flächenkörper 2 eingerichtet sein. Insbesondere kann auf diese Weise erreicht werden, dass jeder größere Flächenkörper, verglichen mit dem kleinsten zu vermessenden Flächenkörper 2 ebenfalls in der Position erfasst werden kann.

Der OCT-Scanner 1 umfasst ferner eine Steuer- und/oder Kontrolleinheit 12, die über Datenund/oder Steuerleitungen 13 mit den Einheiten des OCT-Scanners 1 verbunden ist. Die Steuerund/oder Kontrolleinheit 12 kann eine oder mehrere Prozessoren und dgl. umfassen, die dazu eingerichtet sind, den Betrieb des OCT-Scanners 1 zu steuern, insbesondere die Datenerfassung zur Erfassung der Topologiedaten und/oder Anisotropiedaten, die Datenverarbeitung zur Ermittlung von Topologieeigenschaften und/oder Anisotropieeigenschaften des Flächenkörpers 2 und den Transport des Flächenkörpers 2 während der Datenerfassung durch die Messstrecke M zu steuern.

Bei dem OCT-Scanner 1 der FIG. 1 ist die in Draufsicht dargestellte Seite des Flächenkörpers 2 den OCT-Einheiten 9 bzw. OCT-Sensoren 9 und den Positionssensoren 11 zugewandt, wobei Messseiten bzw. Messköpfe der jeweiligen Sensoren 9, 11 dem Flächenkörper 2 zugewandt sind. Die Messebene E des OCT-Scanners 1 kann horizontal oder vertikal ausgerichtet sein.

Mit dem OCT-Scanner 1 und dem Messarm 8 kann durch die Bewegung des Flächenkörpers 2 durch die Messtrecke M ein zweidimensionales Netz von Messpunkten erstellt werden, mit welchen die Topologie, z.B. die Krümmung usw., des Flächenkörpers 2, beispielsweise eine Glasscheibe, ermittelt werden kann. Zur Ermittlung der Topologie kann z.B. ein 2D-Oberflächenfit verwendet werden, wobei aus dem 2D-Oberflächenfit beispielsweise eine lokale Krümmung und/oder eine Gesamtkrümmung des Flächenkörpers 2 entlang einer beliebigen horizontalen/vertikalen oder diagonalen Linie oder Strecke bzw. einer beliebigen Achse ermittelt werden kann. Beispielsweise kann die Krümmung entlang einer Linie oder Strecke erhalten werden durch einen Fit einer Tangente an eine Querschnittskurve des Flächenkörpers 2 entlang der jeweils interessierenden Richtung bzw. Linie, wobei aus einem maximalen Abstand der Tangente zur Querschnittskurve die Krümmung ermittelt werden kann.

Der Messarm 8 kann eine oder mehrere OCT-Einheiten 9 bzw. OCT-Sensoren 9 aufweisen, wobei die in FIG. 1 gezeigte Anzahl an OCT-Einheiten 9 nicht beschränkend sein soll. Beispielsweise ist es je nach Ausgestaltung und der jeweils gewünschten räumlichen Auflösung möglich, dass der Messarm 8 mehrere, allgemein n (n ∈ N), fest am Messarm 8 angebrachte OCT-Einheiten 9 bzw. OCT-Sensoren 9 aufweist, mit welchen ein 2D-Gitter von Messpunkten erfasst werden kann. Dabei bestimmt der in Längsrichtung des Messarms 8 gegebene Abstand der OCT-Sensoren 9 die räumliche Auflösung parallel zum Messarm 8. Senkrecht zum Messarm 8 bzw. parallel zur Förderrichtung F bestimmt unter anderem die Fördergeschwindigkeit des Flächenkörpers 2 den räumlichen Abstand der Messpunkte bzw. eine Auflösung in Förderrichtung F. Die Auflösung wird schließlich auch bestimmt durch die Frequenz der Messung, beispielsweise eine Frequenz einer Laserquelle eines OCT-Sensors. Die einzelnen OCT-Sensoren 9 können entweder parallel betrieben werden, beispielsweise unter Verwendung von Strahlteilern, oder die einzelnen OCT-Sensoren 9 können sequentiell unter Verwendung eines optischen Multiplexers angesprochen werden.

In Ausgestaltungen kann auch vorgesehen sein, beispielsweise wenn ein feineres Raster an Messpunkten verglichen mit festen OCT-Sensoren 9 erreicht werden soll, dass ein oder mehrere OCT-Sensoren 9 bewegbar am Messarm 8 angeordnet sind. Der oder die OCT-Sensoren 9 können z.B. längs einer Bewegungsachse aktuatorbetrieben ausgebildet sein, so dass die OCT-Sensoren 9 zur Erfassung von Topologie- und/oder Anisotropiedaten längs einer Bewegungsachse parallel zum Messarm 8 bewegbar sind. Entsprechende OCT-Sensoren 9 können beispielsweise mit einer Geschwindigkeit von 5 m/s oder mehr bewegt werden. Dabei kann ein einem OCT-Sensor 9 zugeordneter Aktuator so ausgebildet sein, dass sich der OCT-Sensor 9 entlang der Bewegungsachse oszillierend bewegt. Bei bewegten OCT-Sensoren 9 kann die Längsachse L des Messarms 8 parallel zur Förderebene E geneigt sein, insbesondere relativ zum Anschlag 7 in Richtung der Förderrichtung F geneigt oder gekippt sein. Ein Neigungswinkel oder Kippwinkel w, der in FIG. 1 strichliniert angedeutet ist, kann z.B. zwischen 2 bis 3 Grad liegen, was insbesondere vorteilhaft ist hinsichtlich der Bewegung des Flächenkörpers 2 in Förderrichtung F.

Bei längs des Messarms 8 bewegten OCT-Sensoren 9 wird die Rasterauflösung parallel zum Messarm 8 durch das Verhältnis zwischen der Geschwindigkeit der OCT-Sensoren 9 und der Wiederholrate des Messkopfs bzw. eines Lasers des jeweiligen OCT-Sensors 9 bestimmt. In Förderrichtung F wird die Rasterauflösung der Messpunkte durch die Geschwindigkeit des Flächenkörpers 2 relativ zu derjenigen Zeit, welche der OCT-Sensor 9 für eine oszillatorische Bewegung parallel zum Messarm 8 benötigt.

Ein noch feineres Raster in Förderrichtung kann erreicht werden, wenn die OCT-Sensoren 9 Hohlspiegel-Scanmodule umfassen, wobei jedes Spiegelmodul dazu eingerichtet ist, eine gewisse Länge parallel zum Messarm abzutasten. Das ist beispielsweise möglich da ein Scan parallel zum Messarm 8 deutlich schneller durchgeführt werden kann als eine motorisierte Achse, ohne dabei groß an vertikaler Ortsauflösung zu verlieren.

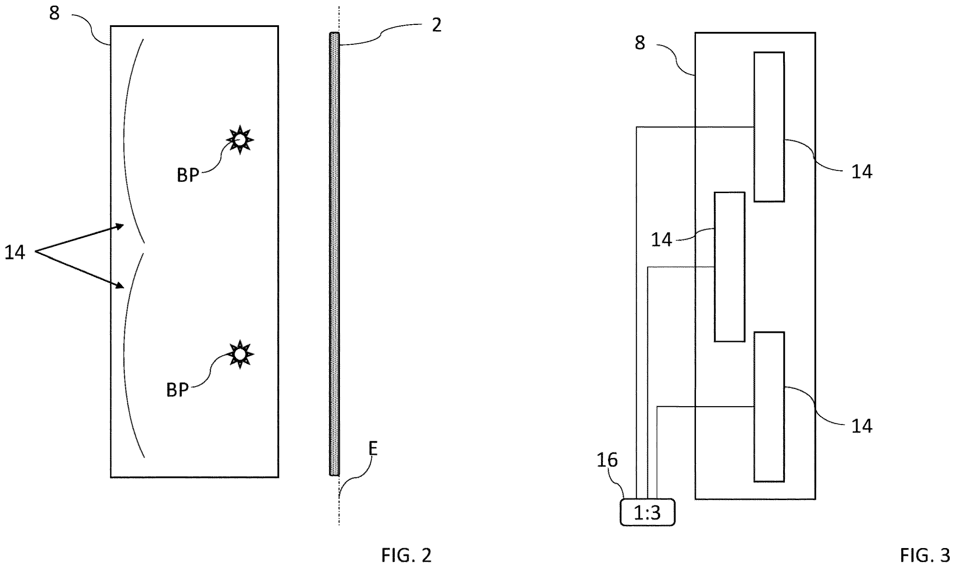

Eine schematische, nicht maßstabsgetreue Darstellung zweier Hohlspiegel-Scanmodule bzw. Hohlspiegelmodule 14 längs des Messarms 8 ist im Querschnittsdarstellung in FIG. 2 dargestellt. Der Messarm 8 kann auch mehr als zwei Hohlspiegelmodule 14 umfassen.

Die in FIG. 2 gezeigten Hohlspiegelmodle 14 ermöglichen ein Scannen entlang einer Linie parallel zum Messarm 8, wobei mit zwei Hohlspiegelmodulen z.B. eine Scanlänge von bis zu 6 m erreicht werden kann.

Jedes Hohlspiegelmodul 14 kann einen Faserkollimator, einen Resonanzscanner (mit z.B. 250 Hz, +/- 12,5 Grad mechanische Neigung), einen MEMS-basierten Spiegel (z.B. Hamamatsu S13989-01H) oder einem Polygon-Scanspiegel im Brennpunkt eines Spiegelstreifens umfassen. Der Spiegelstreifen kann z.B. einen Radius von 6,9 m aufweisen.

Durch einen als Hohlspiegel ausgebildeten Spiegelstreifen kann der Scanstrahl des OCT-Sensors 9 weitgehend orthogonal auf den Flächenkörper 2 gelenkt werden, wodurch vergleichsweise gute OCT-Signale erhalten werden können. Zur weiteren Verbesserung der Abbildungsqualität kann ein elliptisches Spiegeldesign verwendet werden. Für den Spiegelstreifen kommt z.B. eine in Form gebogene Polystyrolplatte in Frage, die beispielsweise eine Dicke von 20 mm aufweisen kann.

Zur Vermeidung von Abbildungslücken können Spiegelmodule 14 oder Spiegelstreifen 14 in Richtung parallel zur Förderrichtung F versetzt angeordnet sein, wobei in diesem Fall die Spiegelstreifen 14 unter Verwendung eines Strahlenteilers mit der Strahlungs- oder Lichtquelle der OCT-Einheit 9 verbunden sein können. Ein Beispiel für eine solche Anordnung mit drei Spiegelmodulen 14 und einem 1:3 Strahlteiler 16 ist in einer Draufsicht auf den Messarm 8 der FIG. 3 gezeigt. Bei Verwendung solcher Spiegel bzw. Hohlspiegel ist der Flächenkörper 2 vom Spiegel bzw. Hohlspiegel 14 vorteilhafterweise im doppelten Abstand der durch den Brennpunkt BP gegebenen Brennweite angeordnet.

Bei dem OCT-Sensoren 9 bzw. Einheiten 9 wird als Strahlungsquelle vorzugsweise ein Laser verwendet. Für die beschriebenen Hohlspiegelmodule 14 eignet sich z.B. eine 30-kHz-Laserquelle. Es können in Längsrichtung des Messarms 8 betrachtet räumliche Auflösungen von 2,5 cm erreicht werden, wenn sich der Flächenkörper 2 in Förderrichtung F beispielsweise mit einer Geschwindigkeit, von 750 m/s. Während aufeinanderfolgender Scans bewegt sich der Flächenkörper 2 gerade nur 0,8 mm, wodurch es möglich ist, eine vorteilhafte Auflösung zu erzielen. Eine räumliche Auflösung von 2,5 cm oder besser ermöglicht insbesondere die Ermittlung der lokalen Wölbung des Flächenkörpers 2, beispielsweise für lokale Dimensionen von 30 cm oder weniger.

Die räumliche Rasterauflösung kann weiter gesteigert werden, beispielsweise indem
i) bei den OCT-Sensoren 9 ein Laser mit höherer Repetitionsrate verwendet wird - was allerdings auch einen schnelleren Digitalisierer erfordert, wenn die Abbildungstiefe nicht beeinträchtigt werden soll,
ii) ein Scanner mit höherer Resonanzfrequenz oder eine Scan-Multiplier-Einheit verwendet wird (es wird beispielhaft verwiesen auf: Sheng Xiao, lan Davison, and Jerome Mertz, "Scan multiplier unit for ultrafast laser scanning beyond the inertia limit," Optica 8, 1403-1404 (2021), die vollständig einbezogen wird), und/oder
iii) mehrere aber kleinere Scan-Submodule, wie Hohlspiegelmodule 14, verwendet werden, die über einen 1:N-Strahlteiler parallel betrieben werden.

Eine besonders kompakte Anordnung und ein besonders kompakter Aufbau kann für Hohlspiegel- oder Spiegelmodule 14 erreicht werden, wenn der Strahlengang der verwendeten Strahlung bzw. des verwendeten Lichts ein- oder mehrfach gefaltet wird. Zur Faltung des Strahlengangs der Hohlspiegel-OCT-Sensoren können ein oder mehrere zusätzliche Spiegel verwendet werden.

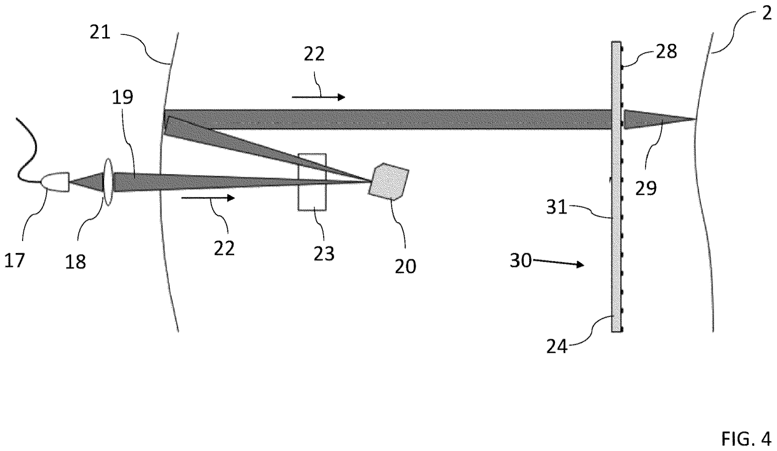

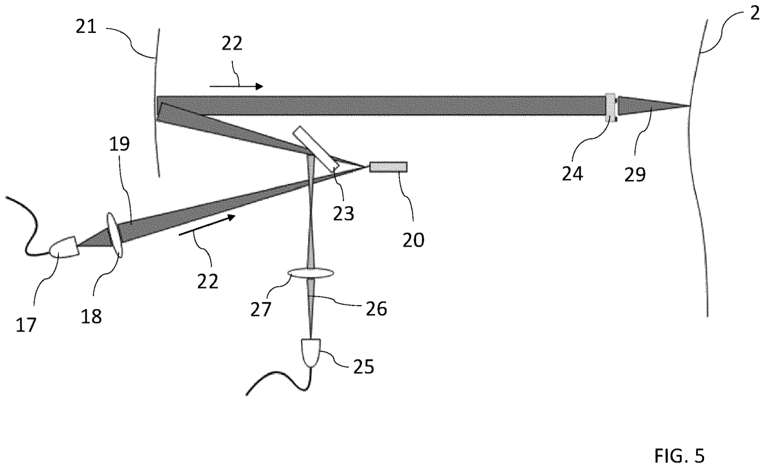

FIG. 4 und FIG. 5 eine Seitenansicht und Draufsicht auf eine Messanordnung gemäß einer Ausgestaltung der Erfindung. FIG. 4 zeigt eine OCT-Einheit 9 mit einer Lichtquelle in Form einer Auskoppelfaser 17 (zur Auskopplung von Laserlicht einer Laserlichtquelle in das optische System) mit einer zugeordneten Optik 18 zur Fokussierung des Laserlichts 19 auf einen Polygonspiegel bzw. Galvanometerspiegel 20 im Brennpunkt des elliptisch ausgebildeten Scanspiegels 21 bzw. Hohlspiegels. Im Strahlengang der ausgehenden Strahlung 22 ist der Optik 18 ein Strahlteiler 23 nachgeschaltet, und dem Scanspiegel 21 ist im Strahlengang der ausgehenden Strahlung 22 ein Linsenarray 24 nachgeschaltet.

FIG. 5 zeigt die Messanordnung der FIG. 4 in Draufsicht, in welcher ferner eine Einkoppelfaser 25 bzw. Empfangsfaser 25 zum Empfang des reflektierten Laserlichts 26 ersichtlich ist, zusammen mit einer entsprechenden Empfangsoptik 27. Das am Flächenkörper 2 reflektierte Laserlicht 26 tritt durch das Linsenarray 24 und wird über den Scanspiegel 21 und den Strahlteiler 23 zur Einkoppelfaser 25 geleitet. Die Einkoppelfaser 25 ist mit einem Detektor gekoppelt, mit welchem die OCT-signale erfasst werden.

Ein Glasfenster, oder allgemein ein Flächenkörper 2 im Sinne dieser Erfindung, das eine Gesamtwölbung aufweist, kann an den Rändern Oberflächenwinkel von bis zu +/-2,5 Grad aufweisen. Diese Oberflächenwinkel führen dazu, dass das vom Glasfenster reflektierte Licht eine andere Richtung hat als das einfallende Licht der OCT-Sensoren 9, beispielsweise bei Verwendung von kollimiertem einfallenden Licht. Dies führt dazu das vom Flächenkörper 2 zurückreflektierte Licht nicht mehr oder nicht mehr optimal auf den Galvanometerspiegel und damit nicht mehr oder nicht optimal auf die Einkoppelfaser 25 trifft. Entsprechende Signale sind dementsprechend verfälscht bzw. von schlechter Qualität oder fehlen gar ganz, so dass keine Topologiedaten und/oder Anisotropiedaten erfasst werden können, bzw. dass entsprechende Daten nur mit verminderter Genauigkeit ermittelt werden können.

Um dieses Problem zu lösen, ist in dem Beispiel der FIG. 4 und 5, zwischen dem Scanspiegel 21 bzw. Fokussierspiegel und dem Flächenkörper 2 das Linsenarray 24, z.B. ein Folien/PMMA-Substrat mit einer Vielzahl an Einzellinsen 28, eingesetzt. Die Linsen 28 sind auf der dem Flächenkörper 2 zugewandten Seite ausgebildet, wobei das Linsenarray 24 vom Flächenkörper 2 mit einem vorgegebenen Abstand beabstandet angeordnet ist, beispielsweise in einem Abstand von 100 mm. Das Linsenarray 24 bzw. die Linsen 28 erzeugt/erzeugen einen fokussierten Strahl 29, der - auch für die gekrümmten Flächen des Flächenkörpers 2 - einen Strahl in einem Winkel orthogonal zur Oberfläche des Flächenkörpers 2 enthält. Dieser orthogonale Strahl ist dann derjenige Strahl, der "perfekt" zum Galvanometerspiegel 20 und damit zur Einkoppelfaser 25 zurückkehrt und zur Signalerfassung verwendet werden kann. Das bedeutet, das Linsenarray 24 ermöglicht durch Fokussierung in gewissen Grenzen eine Verbesserung der Signale der reflektierten Strahlung bei gekrümmten Flächen.

Beispielsweise kann bei einer Krümmung im Bereich von 2,5 Grad, z.B. der Neigung an einer Kante eines gebogenen Glases von 6 m Länge, und einer Brennweite des Scanspiegels 21 von f=100 mm der Abstand zwischen Linsenarrays 24 und Flächenkörper 9 mm betragen. In diesem Fall kann bzw. sollte die Divergenz des vom Galvanometerspiegel 20 ausgehenden Strahls so gewählt sein, dass er einen vollen Durchmesser einer Einzellinse 28 des Linsenarrays 24 beleuchtet.

Ein weiterer Vorteil des Linsenarrays 24 besteht darin, dass die von den Einzellinsen 28 abgewandte Rückseite 30 (FIG. 4) des Linsenarrays 24 als eine Referenzfläche 31 für die OCT verwendet werden kann, welche die Verwendung eines OCT-Aufbaus mit Autokorrelation ermöglicht, oder eine Referenzfläche 31 für Kreuzkorrelations-OCT bereitstellt.

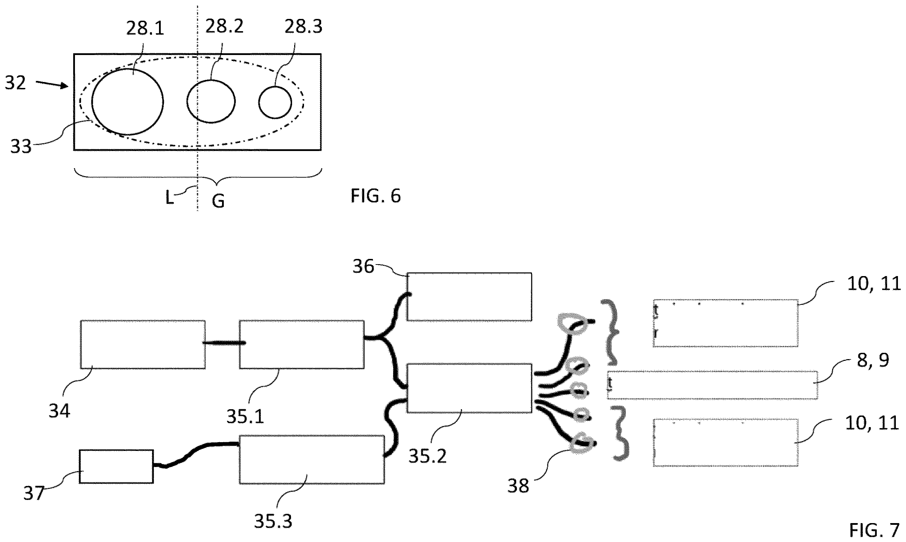

Um variierenden Abständen zwischen dem Flächenkörper 2 und OCT-Einheiten 9 bzw. dem Linsenarray 24 Rechnung zu tragen, kann eine Einheitszelle des Linsenarrays 24 aus einer Gruppe von Einzellinsen 28 mit unterschiedlichen Brennweiten bestehen. Beispielsweise, wie in FIG. 6 gezeigt, einer ersten Linse 28.1 mit einer Brennweite f=150 mm, und einem Durchmesser Ø = 13,5 mm, einer zweiten Linse 28.2 mit einer Brennweite f=100 mm und einem Durchmesser Ø = 9 mm, und einer dritten Linse 28.3 mit einer Brennweite f=50 mm und einem Durchmesser Ø = 4,5 mm. In dem gezeigten Beispiel erstrecken sich die Linsen 28 quer zur Scanrichtung bzw. quer zur Längsachse L des Messarms 8. Möglich ist auch, dass sich die Linsengruppen in Richtung des Messarms 8 bzw. in Scanrichtung, d.h. parallel zur Längsrichtung L, erstrecken. Die Linsengruppen 32 sind wiederholend hintereinander angeordnet, so dass entweder jeweils drei nebeneinander senkrecht zur Scanrichtung angeordnete Linsen hintereinander oder die Linsengruppen 32 sequentiell in Scanrichtung, die der Längsrichtung L entspricht, wiederholend hintereinander angeordnet sind.

Sind die Linsen 28 einer Linsengruppe 32 parallel zur Scanrichtung bzw. quer zur Längsachse L des Messarms 8 angeordnet so verringert sich die räumliche Auflösung um die Größe G der Einheitszelle der Linsengruppe 32. Bei Anordnung quer, insbesondere senkrecht zur Längsachse L des Messarms 8, ist es erforderlich, dass der Beleuchtungsstrahl so geformt ist, beispielsweise elliptisch geformt ist, dass das gesamte Linsen-Tupel gleichzeitig beleuchtet wird, wodurch eine Beeinträchtigung der räumlichen Auflösung vermieden werden kann. Ein das gesamte Linsen-Tupel erfassender elliptischer Beleuchtungsstrahl bzw. Beleuchtungsfleck 33 ist in FIG. 6 beispielhaft durch die strichpunktierte Ellipse dargestellt.

Die im Zusammenhang mit FIG. 1 gezeigten Positionssensoreinheiten 10 ermöglichen eine Bestimmung der 3D-Position des Flächenkörpers 2 im Raum, insbesondere relativ zum Messarm 8 und/oder zur Förderebene E. Es können z.B. mindestens 3 räumlich getrennte Abstandsmessungen vorgesehen werden, um bei der Bewegung des Flächenkörpers 2 durch die Messstrecke M die 3D Raumposition zu erfassen, die verwendet werden kann zur Ermittlung der Topologiedaten und/oder Anisotropiedaten, insbesondere zur Korrektur von Bewegungen des Flächenkörpers 2 senkrecht und/oder parallel zur Förderebene E. Die Positionssensoreinheiten 10 können z.B. drei verschiedenen 3 Varianten realisiert werden:
- Jede Positionssensoreinheit 10 bzw. jedes Modul kann mindestens 4 feste Positionssensoren 11 umfassen, die je als zwei Sensorpaare ortsfest platziert sind, wobei die Sensorpaare in einem vorgegebenen Abstand, z.B. in einem Abstand von 1 m voneinander entfernt sein können. Die Positionssensoren 11 eines einzelnen Sensorpaares sind vorzugsweise in einem Abstand angebracht, der dem Produkt aus i) der Abtastzeit der OCT-Einheit/en 9 entlang der Längsachse L des Messarms 8 und ii) der Geschwindigkeit des Flächenkörpers 2 in Förderrichtung F entspricht.
- Jede Positionssensoreinheit 10 bzw. jedes Modul umfasst 2 Sensoren, die räumlich voneinander getrennt sind (z.B. in einem Abstand von 1 m angeordnet sind) und sich mit der gleichen Geschwindigkeit wie der Flächenkörper 2 bewegen, indem sie auf einer motorisierten Achse angebracht sind.
- Jede Positionssensoreinheit 10 bzw. jedes Modul besteht aus den Scan-Modulen, deren Aufbau im Wesentlichen oder vollständig einer OCT-Einheit oder einem OCT-Sensor 9 des Messarms 8 entspricht.

Diese Positionssensoreinheiten 10 bzw. Module ermöglichen es, die Bewegung des Flächenkörpers 2 während zweier aufeinander folgender Abtastungen parallel zur Längsachse L des Messarms 8 hinsichtlich der Bewegung des Flächenkörpers 2 zu korrigieren. Die Positionssensoreinheiten 10 bzw. Module können für alle Abtastungen des Flächenkörpers 2 parallel zur Längsachse L des Messarms 8 und entsprechend zur Ermittlung der gesamten Oberflächentopologie des Flächenkörpers 2 verwendet werden. Die Positionssensoreinheit/en 10 bzw. Modul/e sind vorzugsweise so eingerichtet, dass zwischen zwei Abtastungen in einer Richtung parallel zum Messarm 8 mindestens vier gleiche Punkte auf dem Flächenkörper 2 ermittelt bzw. gemessen werden, wodurch eine Bewegungskorrektur möglich ist.

FIG. 7 zeigt einen beispielhaften Aufbau einer Messeinheit unter Verwendung einer OCT-Lichtquelle 34, z.B. einer Laserlichtquelle, für die Sensoren 9, 11 in Kombination mit mehreren Strahlteilern 35. Ausgehend von der OCT-Lichtquelle 34 kann z.B. ein 99:1 Strahlteiler 35.1 vorgesehen sein, dessen Ausgänge verbunden sind einerseits mit einer Einheit 36 zur Ermittlung eines k-clock Signals und andererseits mit einem 2:5 Strahlteiler 35.2. Die rechterhand gelegenen Anschlüsse des Strahlteilers 35.2, im vorliegenden Fall fünf Ausgänge, sind mit den OCT-Sensoren 9 und den Positionssensoren 11 verbunden, die das Licht der OCT-Lichtquelle zur Abtastung des Flächenkörpers 2 nutzen. Ein weiterer Anschluss des Strahlteilers 35.2 ist mit einem weiteren 50:50 Strahlteiler 35.3 bzw. Splitter verbunden, der wiederum mit einer Signalverarbeitungseinheit 37 verbunden ist. Die Signalverarbeitungseinheit 37 ist dazu eingerichtet ist, die OCT-Signale der Sensoren 9 und 11 zu verarbeiten und ggf. die Topologiedaten und/oder Anisotropiedaten zu ermitteln.

Wie in FIG. 7 schematisch gezeigt ist, können den Sensoren 9, 11 variable optische Abschwächer (38; VOA) zugeordnet sein, die z.B. in Abhängigkeit des lokalen Reflexionsgrads des Flächenkörpers 2 bei der Bewegung des Flächenkörpers 2 durch die Messstrecke M zur Abschwächung der Licht-Signale so gesteuert werden können, dass die vom Flächenkörper 2 reflektierten Signale eine im Wesentlichen gleichmäßige Signalstärke aufweisen, zumindest jedoch bei hoher Reflektivität eine Signalstärke, mit der eine Sättigung des Detektors vermieden werden kann.

Wie sich aus FIG. 7 ergibt, ist es je nach verwendeter Variante der verwendeten OCT-Einheiten erforderlich, die OCT-Lichtquelle 34 aufzuteilen im Beispiel der FIG. 7 durch den Strahlteiler 35.1, um jeden der Sensoren 9, 11 mit Licht zu versorgen.

Bei der Darstellung der FIG. 7 kann einem zweiten Anschluss des Strahlteilers 35.3 bzw. Splitters, ein Teil des Lichts der OCT-Lichtquelle 34 als Referenzsignal zugeführt werden, das um die Länge eines Probearms verzögert ist (Kreuzkorrelationsmodus). Alternativ kann das Referenzsignal durch die Reflexion an der idealen Referenzfläche 31 vor dem Flächenkörper 2 erzeugt werden (Autokorrelationsmodus). In diesem Fall ist keine symmetrische Detektion möglich und der Strahlteiler 35.3 ist nicht erforderlich. Der Vollständigkeit halber soll erwähnt werden, dass die Referenzfläche 31 auch für einen Kreuzkorrelationsmodus des OCT-Scanners 1 vorteilhaft sein kann, da nur relative Messfehler ausschlaggebend sind.

Bei der Autokorrelationsvariante mit Referenzfläche 31, die das OCT-Referenzsignal erzeugt, benötigt der OCT-Aufbau keinen Referenzarm, da die Referenz durch das Referenzsubstrat bzw. die Referenzfläche 31 erzeugt wird. Das Referenzsubstrat kann beispielsweise eine gestreckte Folie mit vorgegebenem und angepasstem Reflexionsvermögen sein. In diesem Autokorrelationsmodus kann ein zweites, idealerweise flaches, Referenzsubstrat, z.B. eine gestreckte Folie, vorgesehen sein, dass zwischen dem Referenzsubstrat und dem Flächenkörper 2 angeordnet ist. Das zweite Referenzsubstrat, bzw. die Folie, kann dazu ausgebildet sein, etwaige Pfadlängenunterschiede in den OCT-Einheiten, die beispielsweise durch Fertigungstoleranzen bedingt sein können, auszugleichen.

Möglich ist gemäß Ausgestaltungen auch, dass, unter Verwendung eines Referenzsubstrats, eine Kalibration von Pfadlängenunterschieden einmalig durchgeführt werden kann.

Im Autokorrelationsaufbau bzw. -modus kann die OCT-Referenz vom Referenzsubstrat bzw. der Referenzfläche 31 jedes einzelnen OCT-Scanmoduls stammen. Um zwischen den OCT-Scanmodulen zu unterscheiden, kann der Abstand des Referenzsubstrats, insbesondere zum zweiten Referenzsubstrat, bzw. der Abstand entsprechender Flächen, und damit auch der Abstand zum Flächenkörper für jedes OCT-Scanmodul spezifisch eingestellt werden.

Die erfassten bzw. reflektierten Signale können, wie bei der OCT üblich, mit einem Hochgeschwindigkeitsdigitalisierer erfasst und können von einem GPU (Graphical Processing Unit)-beschleunigten Algorithmus verarbeitet werden. Der Algorithmus kann dazu eingerichtet sein, eine k-clock Linearisierung durchzuführen, insbesondere für aufeinanderfolgende Messungen. Die Datenerfassung kann mit der Bewegung der Galvanometerscanner bzw. Galvanometerspiegel 20 synchronisiert werden, so dass auf Grund der Positionserfassung eine genaue Zuordnung der Daten mit dem Flächenkörper 2 möglich ist.

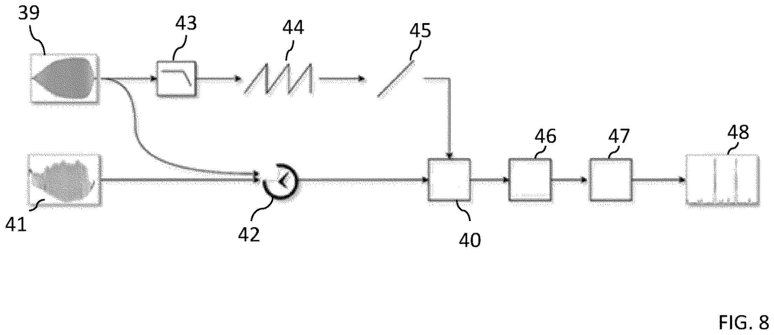

FIG. 8 zeigt einen beispielhaften Verfahrensablauf zur Datenerfassung und Datenermittlung bei der OCT-basierten Ermittlung von Topologiedaten. Der Algorithmus verwendet ein auf einer k-Clock 39 basiertes Resampling 40 für OCT-Signale 41. Der Algorithmus kann aus Leistungsgründen auf einer Prozessorarchitektur mit paralleler Datenverarbeitung, beispielsweise einer GPU, ausgeführt, werden.

Zum Resampling 40 erfolgt eine Abstimmung bzw. ein Abgleich 42 der Start- bzw. Anfangszeiten für die k-Clock 39 und OCT-Signale 41. Vor dem Resampling 40 erfolgt eine Filterung 43 der k-Clock 39 z.B. mit einem Null-Phasen (engl. zero phase) Tiefpassfilter, gefolgt von einer Berechnung 44 der Phasenentwicklung und einer Extraktion 45 des Phasenverlaufs (sog. "phase unwrapping"). Nach dem k-Clock-basierten Resampling 40 der OCT-Signale 41 folgt nach Anwenden einer Fensterfunktion 46 (engl. "window function") auf das Resamplingergebnis eine schnelle Fourier-Transformation (FFT) 47 zur Ermittlung von OCT-Periodogrammen 48. Aus den OCT-Periodogrammen 48 wiederum können den Flächenkörper 2 charakterisierende Daten bestimmt werden, wie beispielsweise Topologiedaten, insbesondere Krümmung.

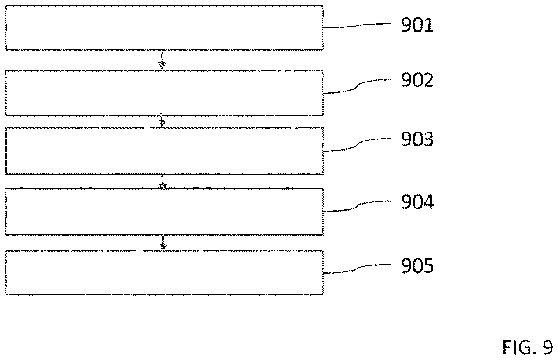

FIG. 9 zeigt Schritte, die bei einem erfindungsgemäßen Verfahrensablauf ausgeführt werden können. In einem ersten Schritt 901 kann der Flächenkörper 2, z.B. eine Glasscheibe, entsprechend der Förderebene E positioniert und platziert werden. Hierzu kann der Flächenkörper 2 beispielsweise in eine zur Ausrichtung der Förderebene E korrespondierende Position, die z.B. vertikal geneigt ist, gebracht werden.

Nach der Positionierung des Flächenkörpers 2, und vor der Durchführung der OCT-basierten Messungen, können in einem zweiten Schritt 902 Informationen über den Flächenkörper 2, wie beispielsweise Daten zur Größe usw. und/oder Daten zum Reflexionsverhalten und/oder zur lokalen oder globalen Reflexionsgrad, an die Messeinheit übermittelt werden. Die Daten zum Flächenkörper 2, insbesondere zum Reflexionsgrad, können verwendet werden zur Steuerung der Signalerfassung, beispielsweise der VOA oder AOM. Variationen im Reflexionsgrad können beispielsweise bedingt sein durch Beschichtungen am Flächenkörper 2.

In einem weiteren Schritt 903 werden OCT-Messungen am Flächenkörper 2 durch kontinuierliches Scannen des Flächenkörpers 2 durchgeführt, während dieser durch die Messstrecke M bewegt wird. Nach Verlassen der Messstrecke M wird die Messung beendet.

Nach der Datenerfassung im Schritt 903 oder zumindest teilweise gleichzeitig zur Datenerfassung, werden die erfassten OCT-Daten in einem weiteren Schritt 904 bezüglich der durch die Positionssensoren 11 erfassten Bewegungsdaten korrigiert, d.h. es werden durch die Bewegung des Flächenkörpers 2 ggf. verursachte Datenfehler korrigiert.

Schließlich können in einem Schritt 905 Topologiedaten und/oder Anisotropiedaten ermittelt werden, wie beispielsweise die lokale und/oder globale Krümmung des Flächenkörpers 2.

Mit der vorgeschlagenen Vorrichtung und dem hierin vorgeschlagenen Verfahren ist es auch möglich, einen Stapel von Flächenkörpern 2, d.h. mehr als nur einen einzelnen Flächenkörper, beispielsweise Mehrscheiben-Flachglassubstrate bzw. Verbundscheiben zu vermessen, insbesondere wenn die Schichten des Stapels in gleichen Wellenlängenbereichen transparent sind. Eine mögliche Anwendung für diesen Aufbau ist die Messung der Gesamtwölbung einer doppelt oder dreifach verglasten Inertglasscheibe. Beim Herstellungsprozess und der Gasfüllung solcher Scheiben und Mehrscheibensubstrate kann sich die Wölbung jeder Glasscheibe bzw. Glasschicht verändern. Solche Änderungen können jedoch mit der hierin vorgeschlagenen Vorrichtung und dem Verfahren vermessen werden. Ferner ist es auch möglich, die Dicke des Spalts zwischen den Glasscheiben bzw. Glasschichten zu ermitteln.

Falls Dicke/Breite und/oder Brechungsindex des Flächenkörpers 2 nicht bekannt sind, könnten diese z.B. vom zweiten Echo der OCT-Signale, basierend auf Messsignalen, die einen Mehrfachdurchgang durch das Messobjekt, oder unter Verwendung eines reflektierenden Aufklebers am Flächenkörper 2, der den Flächenkörper 2 an einer Seite überragt bzw. an einer Seite übersteht, ermittelt werden.

Anisotropiedaten können extrahiert werden, wenn ein polarisations-sensitiver OCT-Aufbau verwendet wird, beispielsweise unter Verwendung eines oder mehrerer Polarisatoren.

Die zu Grunde liegende Erfindung ermöglicht insbesondere eine berührungslose, vergleichsweise schnelle und genaue Vermessung eines Flächenkörpers. Durch die Verwendung eines Referenzsubstrats und Linsenarrays kann ein vergleichsweise einfacher Aufbau umgesetzt werden, mit dem auch für vergleichsweise große Krümmungen zufriedenstellende Ergebnisse erzielt werden können. Ferner ermöglicht die zu Grunde liegende Erfindung die Vermessung vergleichsweise großer Flächenkörper mit Längen bis zu 6 m oder mehr, wobei die Messanordnung so eingerichtet werden kann, dass sich diese automatisch an die Größe des Flächenkörpers anpasst.

### BEZUGSZEICHEN

- 1: Kohärenztomographiescanner
- 2: Flächenkörper
- 3: Transfereinheit
- 4: Messeinheit
- 5: Fördereinheit
- 6: Förderplattform
- 7: Anschlag
- 8: Messarm
- 9: OCT-Einheit/OCT-Sensor
- 10: Positionssensoreinheit
- 11: Positionssensor
- 12: Steuer- und/oder Kontrolleinheit
- 13: Steuer- bzw. Datenleitung
- 14: Hohlspiegelmodul
- 15: Brennpunkt
- 16: Strahlteiler
- 17: Auskoppelfaser
- 18: Optik
- 19: Laserlicht
- 20: Polygonspiegel / Galvanometerspiegel
- 21: Scanspiegel
- 22: Strahlengang ausgehende Strahlung
- 23: Strahlteiler
- 24: Linsenarray
- 25: Einkoppelfaser bzw. Empfangsfaser
- 26: reflektiertes Laserlicht
- 27: Empfangsoptik
- 28: Einzellinse
- 28.1 - 28.3: Einzellinsen
- 29: fokussierter Strahl
- 30: Rückseite
- 31: Referenzfläche
- 32: Linsengruppe
- 33: Beleuchtungsfleck
- 34: OCT-Lichtquelle
- 35: Strahlteiler
- 36: Einheit zur Ermittlung eines k-clock Signals
- 37: Signalverarbeitungseinheit
- 38: variabel optischer Abschwächer
- 39: k-clock
- 40: Resampling
- 41: OCT-Signal
- 42: k-clock Abgleich
- 43: Filterung
- 44: Berechnung Phasenentwicklung
- 45: Extraktion Phasenverlauf
- 46: Fensterfunktion
- 47: Fourier-Transformation
- 48: OCT-Periodogrammen

- 901 - 905: Verfahrensschritte

- B: Breite
- BP: Brennpunkt
- E: Förderebene
- F: Förderrichtung
- G: Größe der Einheitszelle einer Linsengruppe
- L: Längsachse
- M: Messstrecke
- w: Neigungs-, Kippwinkel

## Patentansprüche

1. Optischer Kohärenztomographiescanner (1) zur automatisierten, kontaktlosen Ermittlung einer, insbesondere zwei- oder dreidimensionalen, Topologie und/oder der Anisotropie eines zumindest abschnittsweise optisch transparenten, ein- oder mehrschichtigen Flächenkörpers (2), insbesondere einer Glasscheibe oder Verbundglasscheibe, umfassend eine Transfereinheit (3) und eine Messeinheit (4), wobei
a. die Messeinheit (4) eine Messstrecke (M) mit mehreren stationären Sensoreinheiten (8, 10) definiert,
b. die Transfereinheit (4) eine Fördereinheit (5) mit einer Förderplattform (6) zur Auflage des Flächenkörpers (2) aufweist, wobei die Förderplattform (6) eine Förderebene (E) der Fördereinheit (5) definiert, und die Fördereinheit (5) dazu eingerichtet ist, den Flächenkörper (2) in einer im Wesentlichen linearen Förderrichtung (F) parallel zur Förderebene (E) durch die Messstrecke (M) und flächig an den Sensoreinheiten (8, 10) vorbei zu fördern,
c. die Messeinheit (4) als Sensoreinheiten (9) zumindest eine optische Kohärenztomographiesensoreinheit (8, 9) zur Erfassung von Topologie- und/oder Anisotropiedaten des Flächenkörpers (2) mittels optischer Kohärenztomographie und zumindest eine optische Positionssensoreinheit (10, 11) zur Erfassung einer Raumposition des Flächenkörpers (2) während der Erfassung der Daten umfasst, und
d. die Kohärenztomographiesensoreinheit (8, 9) einen sich quer zur Förderrichtung (F) und im Wesentlichen parallel zur Förderebene (E) erstreckenden Messarm (8) aufweist, dessen Länge eine senkrecht zur Förderrichtung (F) gemessene Breite (B) der Messstrecke (M) festlegt, wobei der Messarm (8) zumindest einen Kohärenztomographiesensor (9) mit einer der Förderebene (E) zugewandten Messseite aufweist.

2. Optischer Kohärenztomographiescanner (1) nach Anspruch 1, wobei der zumindest eine Kohärenztomographiesensor (9) eine MEMS-VCSEL, insbesondere MEMS-VCSEL/FDML, Lichtquelle (34), vorzugsweise eine Swept-Soure MEMS-VCSEUFDML Lichtquelle (34), umfasst.

3. Optischer Kohärenztomographiescanner (1) nach einem der vorangehenden Ansprüche, wobei die Messeinheit (4) und die Fördereinheit (5) für eine Fördergeschwindigkeit von bis zu 0,2 m/s oder mehr eingerichtet sind.

4. Optischer Kohärenztomographiescanner (1) nach einem der vorangehenden Ansprüche, wobei der Messarm (8)
- senkrecht zur Förderrichtung (F) angeordnet ist, oder
- bezüglich einer Senkrechten zur Förderrichtung (F) in Förderrichtung (F) geneigt angeordnet ist, und/oder
- wobei ein Neigungswinkel (w) vorzugsweise im Bereich zwischen 0 Grad und 20 Grad liegt und/oder innerhalb dieses Bereichs variabel einstellbar ist.

5. Optischer Kohärenztomographiescanner (1) nach einem der vorangehenden Ansprüche, wobei zumindest eine erste Positionssensoreinheit (10) im Bereich der Messstrecke (M) an einem Ende des Messarms (8) angeordnet ist, und, optional, ein zweiter Positionssensor (10) von der ersten Positionssensoreinheit (10) beabstandet angeordnet ist, wobei, vorzugsweise, der zweite Positionssensor (10) relativ zum ersten Positionssensor (10) einstellbar variabel positionierbar ist, insbesondere derart, dass ein Abstand der Positionssensoreinheiten (10) an eine Breite eines durch die Messstrecke (M) geförderten Flächenkörpers (2) anpassbar ist.

6. Optischer Kohärenztomographiescanner (1) nach einem der vorangehenden Ansprüche, wobei Kohärenztomographiesensoreinheit (8, 9) umfasst:
- mehrere, insbesondere eine Vielzahl an, Kohärenztomographiesensoren (9), die längs des Messarms (8) verteilt, insbesondere ortsfest, angebracht sind, und/oder
- zumindest einen Kohärenztomographiesensor (9) der längs des Messarms (8) bewegbar, insbesondere oszillatorisch bewegbar, angeordnet ist, wobei der Messarm (8) ferner zumindest einen mit dem Kohärenztomographiesensor (9) gekoppelten Aktuator zum Bewegen des Kohärenztomographiesensors (9) längs des Messarms aufweist, und/oder
- zumindest einen Polarisator, der insbesondere einer Strahlungsquelle (34), insbesondere Lichtquelle, der Kohärenztomographiesensoreinheit (8, 9) nachgeschaltet ist.

7. Optischer Kohärenztomographiescanner (1) nach einem der vorangehenden Ansprüche, wobei zumindest ein Kohärenztomographiesensor (9), vorzugsweise alle Kohärenztomographiesensoren (9), ein Hohlspiegelmodul (14) umfassen, mit einem Hohlspiegelstreifen, dessen optische Achse im Wesentlichen senkrecht Förderebene (E) ausgerichtet ist, und dessen Spiegelfläche der Förderebene (E) zugewandt ist, wobei die Hohlspiegelmodule (14) am Messarm (8) bevorzugt so angeordnet sind, dass ein längs der optischen Achse des Hohlspiegels gemessener Abstand zwischen dem Hohlspiegel und einem durch die Messstrecke (M) geförderten Flächenkörper (2) im Bereich der doppelten Brennweite des Holspiegels liegt, und wobei der Hohlspiegel vorzugsweise eine sphärische oder elliptische Kontur aufweist.

8. Optischer Kohärenztomographiescanner (1) nach Anspruch 7, wobei im Brennpunkt (BP) des Hohlspiegelmoduls (14) ein Kollimator, ein Resonant-Scanner, ein MEMS-Spiegel, oder ein Polygon-Abtastspiegel (20) angeordnet ist.

9. Optischer Kohärenztomographiescanner (1) zumindest nach Anspruch 7 oder 8, umfassend zwei oder mehrere Hohlspiegelmodule (14), wobei
- in Längsrichtung des Messarms (8) zumindest zwei Hohlspiegelmodule (14), vorzugsweise alle Spiegelmodule, hintereinander, insbesondere unmittelbar hintereinander, angeordnet sind, und/oder
- in Längsrichtung des Messarms (8) zumindest zwei Hohlspiegelmodule (14) quer zur Längsrichtung des Messarms (8) zueinander versetzt angeordnet sind.

10. Optischer Kohärenztomographiescanner (1) nach einem der vorangehenden Ansprüche, wobei die Kohärenztomographiesensoreinheit (8, 9) eine Laserlichtquelle (34) mit einer zentralen Wellenlänge im Bereich des sichtbaren oder infraroten, insbesondere des mittleren infraroten, Spektralbereichs aufweist, und wobei die Laserlichtquelle (34) vorzugsweise eine Kohärenzlänge im Bereich von Kohärenzlänge 0,2 m bis 100 m aufweist.

11. Optischer Kohärenztomographiescanner (1) nach einem der vorangehenden Ansprüche, wobei
- die Kohärenztomographiesensoreinheit (8,9) dazu eingerichtet ist, bei einem Scan eines Flächenkörpers (2) mehrere Kohärenztomographiesensoren (9) unter Verwendung eines Strahlteilers (35) parallel zu betreiben, und/oder
- der zumindest eine Kohärenztomographiesensor (9) im Strahlengang der verwendeten Strahlung eine oder mehrere optische Elemente zur Strahlfaltung aufweist.

12. Optischer Kohärenztomographiescanner (1) nach einem der vorangehenden Ansprüche, wobei der Kohärenztomographiesensor (9) als Auskoppelelement für ausgehende Strahlung bzw. als Einkoppelelement für reflektierte Strahlung ein Linsenarray (24) mit einer Vielzahl an Linsen (28) oder Linsengruppen (32) umfasst, wobei die Linsen (28) oder Linsengruppen (32) in Richtung des Messarms (8) hintereinander angeordnet sind.

13. Optischer Kohärenztomographiescanner (1) zumindest nach Anspruch 12, wobei das Linsenarray (24) mehrere Linsengruppen (32) und jede Linsengruppe (32) mehrere Einzellinsen (28) umfasst, wobei, vorzugsweise, die Einzellinsen (28.1 - 28.3) einer Linsengruppe (32) quer zur Längsrichtung des Messarms (8) nebeneinander angeordnet sind, wobei die Einzellinsen (28.1 - 28.3) einer Linsengruppe (32) unterschiedliche Brennweiten aufweisen, und wobei eine Strahloptik des Kohärenztomographiesensors (9) so eingerichtet ist, dass die Einzellinsen (28) einer Linsengruppe (32) jeweils gleichzeitig durch ausgehende Strahlung beaufschlagt werden.

14. Optischer Kohärenztomographiescanner (1) nach einem der vorangehenden Ansprüche, wobei im Strahlengang ausgehender Strahlung (22) zumindest eine teiltransparente Referenzfläche (31) angeordnet ist,
wobei die Referenzfläche (31) vorzugsweise ausgebildet ist:
- an einer beschichteten Folie, wobei eine Beschichtung der Folie die Referenzfläche (31) umfasst oder bildet;
- an oder als eine Fläche des Linsenarrays (24);
- durch eine Flüssigkeitsoberfläche, wobei die Flüssigkeit vorzugsweise in einem vibrationsisolierten Behälter aufgenommen ist und die Oberfläche der Flüssigkeit die Referenzfläche bildet, und/oder
- an einem Referenzsubstrat, aus einem, z.B. für sichtbares Licht und/oder Infrarotlicht, transparenten Material.

15. Optischer Kohärenztomographiescanner (1) nach Anspruch 14, wobei
- die Referenzfläche (31) an einem Referenzsubstrat ausgebildet und der Messseite des Messarms (8) zugewandt ist, und auf einer von der Referenzfläche (31) abgewandten Seite eines Referenzsubstrats vorzugsweise ein Linsenarray (24), insbesondere Mikrolinsenarray, angeordnet ist, und/oder
- die Messeinheit (4) so eingerichtet ist, dass im Strahlengang ausgehender Strahlung (22) der zumindest einen Kohärenztomographiesensoreinheit (8, 9) und/oder der zumindest einen Positionssensoreinheit (10) die Referenzfläche (31) der Messstrecke vorgeschaltet ist.

16. Optischer Kohärenztomographiescanner (1) nach einem der vorangehenden Ansprüche, umfassend ferner einen Strahlteiler (35.2), welcher die von einer Strahlungsquelle (34) des Kohärenztomographiescanners (9) ausgehende Strahlung (22) auf den zumindest einen Kohärenztomographiesensor (9) und zumindest einen Positionssensor (11) der Positionssensoreinheit (10) in einem vorgegebenen Verhältnis aufteilt.

17. Optischer Kohärenztomographiescanner (1) nach einem der vorangehenden Ansprüche, umfassend des Weiteren eine oder mehrere variable optische Abschwächer (38) oder akusto-optische Modulatoren, eingerichtet zur dynamischen Anpassung des Leistungspegels reflektierter Strahlung (26), insbesondere in Abhängigkeit eines vorbekannten Reflexionsgrads und/oder Reflexionstyps des Flächenkörpers (2).

18. Verfahren zur Ermittlung einer, insbesondere zwei- oder dreidimensionalen, Topologie und/oder der Anisotropie eines zumindest abschnittsweise optisch transparenten, einoder mehrschichtigen Flächenkörpers (2), insbesondere einer Glasscheibe oder Verbundglasscheibe, mittels eines optischen Kohärenztomographiescanners (1) nach einem der Ansprüche 1 bis 17, umfassend die Schritte:
a. Bereitstellen des Flächenkörpers (2) an der Transfereinheit (3);
b. Bewegen des Flächenkörpers (2) mittels der Transfereinheit (3) durch die Messstrecke (M);
während der Flächenkörper (2) durch die Messstrecke (M) bewegt wird:
c. Kontinuierliches Erfassen einer Vielzahl an optischen Kohärenztomographiedaten (41, 48) mittels der Kohärenztomographiesensoreinheit (8 - 11) und synchrones Erfassen einer Vielzahl an Positionstaten des Flächenkörpers (2) mittels der Positionssensoreinheit (10),
d. Ermitteln einer Topologie und/oder Anisotropie des Flächenkörpers (2) aus den Kohärenztomographiedaten und den Positionsdaten.

19. Verfahren nach Anspruch 18, umfassend des Weiteren zumindest einen der folgenden Schritte und/oder zumindest eines der folgenden Merkmale:
- Fördern des Flächenkörpers (2) durch die Messstrecke (M) mit einer Geschwindigkeit von 0,2 m/s oder mehr;
- Bewegen eines längs des Messarms (8) bewegbaren Kohärenztomographiesensors (9) mit einer Geschwindigkeit von 5 m/s oder mehr;
- Scannen des Flächenkörpers (2) mit einer Scanrate von 1 bis 100 Hz;
- Abtasten des Flächenkörpers (2) mit einer Abtastrate von 2 GS/s bis 10 GS/s.
- Korrektur der Kohärenztomographiedaten basierend auf den Positionsdaten und/oder daraus ermittelten Bewegungsdaten des Flächenkörpers (2);
- Ermitteln der Topologie, wobei die Topologie eine globale und/oder lokale Krümmung des Flächenkörpers (2) umfasst;
- Ansteuern des variablen optischen Abschwächers (38) oder akusto-optischen Modulators in Abhängigkeit der Förderbewegung und eines für den Flächenkörper (2) bekannten Reflexionsgradprofils und/oder Reflexionstyps;
- Erzeugen einer Oberflächeneintrübung am Flächenkörper (2), insbesondere durch eine Flüssigkeit, wie Wasser, zur Erhöhung des Grads an diffuser Streuung;
- Ermittlung der Dicke des Flächenkörpers (2) auf Grundlage der Kohärenztomographiedaten (41);
- Verwendung einer polarisations-sensitiven optischen Kohärenztomographiesensoreinheit.

20. Optischer Kohärenztomographiescanner (1) nach einem der Ansprüche 1 bis 17, umfassend des Weiteren eine Steuereinheit (12) die derart programmiert ist, dass diese im Betrieb des optischen Kohärenztomographiescanners (12) ein Verfahren nach einem der Ansprüche 18 oder 19 bewirkt, oder umfassend eine Steuereinheit (12) mit einem Prozessor und einer zugeordneten Speichereinheit, auf dem computerlesbare Befehle gespeichert sind, die bei Ausführung durch den Prozessor ein Verfahren nach einem der Ansprüche 18 oder 19 bewirken.
